# EUROPEAN PATENT APPLICATION

(11) **EP 4 614 919 A1**
(43) Date of publication of application: **10.09.2025**
(21) Application number: 22964055.2
(22) Date of filing: 04.11.2022
(51) Int. Cl.: H04L 41/14

(54) **WIRELESS COMMUNICATION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN); LIN, Xue, Dongguan, Guangdong 523860 (CN)
(74) Representative: Grassi, Stefano
(86) International application number: PCT/CN2022/129987
(87) International publication number: WO 2024/092748

(57) **Abstract**

Embodiments of the present application provide a wireless communication method, a device, and a storage medium. The method comprises: a core network device or an access network device sends first information to a terminal device, the first information comprising information associated with a first model, and a sending mode of the first information comprising: sending the first information by means of a control message and/or sending the first information by means of a data channel.

## Description

### TECHNICAL FIELD

Embodiments of the present disclosure relate to the technical field of mobile communication, and in particular to a wireless communication method and device, and a storage medium.

### BACKGROUND

With the continuous development of Artificial Intelligence (AI) and Machine Learning (ML) technologies, the combination of communication technology and AI/ML technology is one of the future communication trends. In order to adapt to the complexity and diversity of communication system scenarios, a large number of types of models may be introduced into communication systems, and the use of these models becomes a technical problem that needs to be solved.

### SUMMARY

Embodiments of the present disclosure provide a wireless communication method and device, and a storage medium.

The wireless communication method provided by the embodiments of the present disclosure includes the following operation.

A terminal device receives the first information sent by an access network device. The first information includes information associated with the first model, and the first information is sent through a control message and/or through a data channel.

The wireless communication method provided by the embodiments of the present disclosure includes the following operation.

An access network device sends the first information to a terminal device. The first information includes information associated with the first model, and the first information is sent through a control message and/or through a data channel.

The wireless communication method provided by the embodiments of the present disclosure includes the following operation.

A core network device sends the first information to an access network device. The first information includes information associated with the first model, and the first information is sent through a control message and/or through a data channel.

A terminal device provided by the embodiments of the present disclosure includes the first communication unit.

The first communication unit is configured to receive the first information sent by an access network device. The first information includes information associated with the first model, and the first information is sent through a control message and/or through a data channel.

An access network device provided by the embodiments of the present disclosure includes the second communication unit.

The second communication unit is configured to send the first information to a terminal device. The first information includes information associated with the first model, and the first information is sent through a control message and/or through a data channel.

A core network device provided by the embodiments of the present disclosure includes the third communication unit.

The third communication unit is configured to send the first information to an access network device. The first information includes information associated with the first model, and the first information is sent through a control message and/or through a data channel.

A communication device provided by the embodiments of the present disclosure may be a terminal device in the above solution, an access network device in the above solution, or a core network device in the above solution. The communication device includes a processor and a memory. The memory is configured to store a computer program, and the processor is configured to call and execute the computer program stored in the memory to perform the above wireless communication method.

A chip provided by the embodiments of the present disclosure is used for implementing the above wireless communication method.

Specifically, the chip includes a processor. The processor is configured to call and execute a computer program in a memory to cause a device on which the chip is mounted to perform the above wireless communication method.

A computer readable storage medium provided by the embodiments of the present disclosure is configured to store a computer program that causes a computer to perform the above wireless communication method.

The computer program product provided by the embodiments of the present disclosure includes computer program instructions that cause a computer to perform the above wireless communication method.

The computer program provided by the embodiments of the present disclosure causes a computer to perform the above wireless communication method when the computer program is executed on the computer.

According to the above technical solutions, the access network device sends the information associated with the first model to the terminal device through the control message or the data channel, so that the information, associated with the first model and stored on the network side, is sent to the terminal device through the control plane or the user plane. The terminal device can obtain the information associated with the first model from the network side, and the first model is deployed on the terminal device under the condition that the capability limitation of the terminal device is satisfied. The process of deploying the first model by the terminal device is more flexible compared with the manner of presetting the information associated with the first model in the terminal device or acquiring the information associated with the first model through the model training process.

### BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure. In the drawings:
FIG. 1 is a schematic diagram of an application scenario according to an embodiment of the present disclosure.
FIG. 2 is an optional schematic flowchart of a wireless communication method according to an embodiment of the present disclosure.
FIG. 3 is an optional schematic flowchart of a wireless communication method according to an embodiment of the present disclosure.
FIG. 4 is an optional schematic flowchart of a wireless communication method according to an embodiment of the present disclosure.
FIG. 5 is an optional schematic flowchart of a wireless communication method according to an embodiment of the present disclosure.
FIG. 6 is an optional schematic flowchart of a wireless communication method according to an embodiment of the present disclosure.
FIG. 7 is an optional schematic flowchart of a wireless communication method according to an embodiment of the present disclosure.
FIG. 8 is an optional schematic flowchart of a wireless communication method according to an embodiment of the present disclosure.
FIG. 9 is an optional schematic flowchart of a wireless communication method according to an embodiment of the present disclosure.
FIG. 10 is an optional schematic structural diagram of a terminal device according to an embodiment of the present disclosure.
FIG. 11 is an optional schematic structural diagram of an access network device according to an embodiment of the present disclosure.
FIG. 12 is an optional schematic structural diagram of a core network device according to an embodiment of the present disclosure.
FIG. 13 is a schematic structural diagram of a communication device according to an embodiment of the present disclosure.
FIG. 14 is a schematic structural diagram of a chip according to an embodiment of the present disclosure.
FIG. 15 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

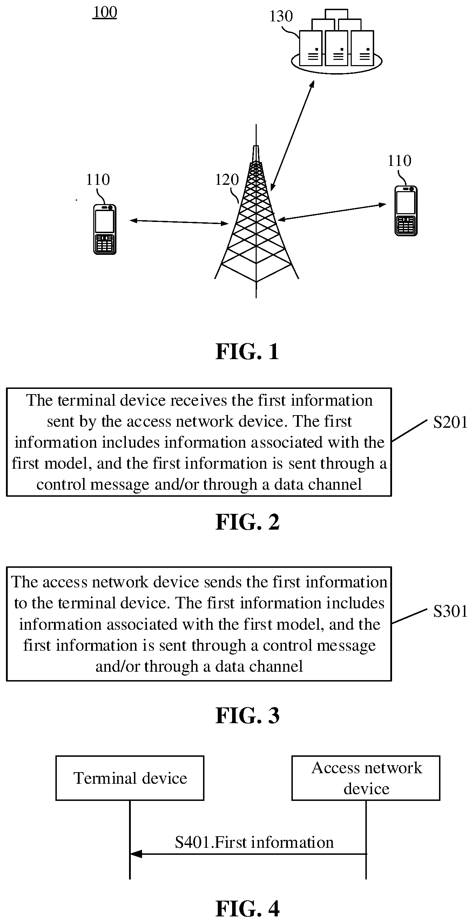

FIG. 1 is a schematic diagram of an application scenario according to an embodiment of the present disclosure.

As illustrated in FIG. 1, the communication system 100 may include terminal devices 110 and a network device 120. The network device 120 may communicate with the terminal device 110 through an air interface. Multi-service transmission is supported between the terminal devices 110 and the network device 120.

It should be understood that the embodiments of the present disclosure are only illustrated with reference to the communication system 100, but the embodiments of the present disclosure are not limited thereto. That is, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) system, an enhanced Machine-Type Communications (eMTC) system, a 5G communication system (also referred to as a New Radio (NR) communication system), or future communication systems, etc.

In the communication system 100 illustrated in FIG. 1, the network device 120 may be an access network device that communicates with the terminal devices 110. The access network device may provide communication coverage for a particular geographic area and may communicate with terminal devices 110 (for example, User Equipment (UE)) located within the coverage area.

The network device 120 may be an Evolutional Node B (eNB or eNodeB) in a LTE system, a Next Generation Radio Access Network (NG RAN) device, a base station (gNB) in an NR system, a wireless controller in a Cloud Radio Access Network (CRAN), a relay station, an access point, a vehicle-mounted device, a wearable device, a hub, a switch, a bridge, a router, or a network device in a future evolved Public Land Mobile Network (PLMN), etc.

The terminal device 110 may be any terminal device including, but not limited to, a terminal device that uses a wired or wireless connection to the network device 120 or other terminal devices.

For example, the terminal device 110 may refer to an access terminal, UE, a subscriber unit, a subscriber station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication function, a computing device or other processing device connected to a wireless modem, a vehicle-mounted device, a wearable device, a terminal device in a 5G network, or a terminal device in a future evolution network, or the like.

The wireless communication system 100 may further include a core network device 130 that communicates with the base station. The core network device 130 may be a 5G Core (5GC) device, for example, an Access and Mobility Management Function (AMF), an Authentication Server Function (AUSF), a User Plane Function (UPF), or a Session Management Function (SMF). Alternatively, the core network device 130 may also be an Evolved Packet Core (EPC) device of an LTE network, for example, a Session Management Function + Core Packet Gateway (SMF + PGW-C) device. It should be understood that the SMF + PGW-C may simultaneously implement functions that the SMF and PGW-C can implement. In the process of network evolution, the core network device may be called by other names, or a new network entity may be formed by dividing the functions of the core network, which is not limited by the embodiments of the present disclosure.

The respective functional units in the communication system 100 may also establish a connection between each other through a next generation (NG) interface to achieve communication.

For example, the terminal device establishes an air interface connection with the access network device through a Uu interface for transmitting user plane data and control plane signaling. The terminal device may establish a control plane signaling connection with the AMF through a NG interface 1 (N1 for short). The access network device, such as a next generation radio access base station (gNB), may establish a user plane data connection with the UPF through an NG interface 3 (N3 for short). The access network device may establish a control plane signaling connection with the AMF through a NG interface 2 (N2 for short). The UPF may establish a control plane signaling connection with the SMF through a NG interface 4 (N4 for short). The UPF may interact user plane data with the data network through a NG interface 6 (N6 for short). The AMF may establish a control plane signaling connection with the SMF through the NG interface 11 (N11 for short). The SMF may establish a control plane signaling connection with the PCF through a NG interface 7 (N7 for short).

FIG. 1 exemplarily illustrates one network device, one core network device, and two terminal devices. Alternatively, the wireless communication system 100 may include multiple network devices, and another number of terminal devices may be included within the coverage range of each network device, which is not limited by the embodiments of the present disclosure.

It should be noted that FIG. 1 only illustrates a system to which the present disclosure is applied in the form of an example. Of course, the methods in the embodiments of the present disclosure may also be applied to other systems. Furthermore, the terms "system" and "network" are often used interchangeably in the present disclosure. In the present disclosure, the term "and/or" is merely used for describing an association relationship of associated objects, which indicates that there may be three relationships. For example, A and/or B may represent that there are three situations: A exists alone, A and B exist simultaneously, or B exists alone. In addition, the character "/" in the present disclosure generally indicates that there is a "or" relationship between the associated objects. It should also be understood that the "indication" mentioned in the embodiments of the present disclosure may be a direct indication, an indirect indication, or represent an associated relationship. For example, A indicates B, which may mean that A directly indicates B, for example, B may be obtained by A. It may also mean that A indicates B indirectly, for example, A indicates C, and B may be obtained through C. It may also represent that there is an association relationship between A and B. It should also be understood that the term "correspondence" mentioned in the embodiments of the present disclosure may represent that there is a direct correspondence or indirect correspondence between the two objects, may represent that there is an association relationship between the two objects, or may represent a relationship between indicating and being instructed, configuring and being configured, or the like. It should also be understood that the "predefined" or "predefined rule" mentioned in the embodiments of the present disclosure may be implemented by storing corresponding codes, tables, or other methods that may be used to indicate relevant information in advance in devices (including, for example, the terminal device and the network device), and specific implementations are not limited in the present disclosure. For example, "predefined" may refer to "defined" in the protocol. It should also be understood that in the embodiments of the present disclosure, the term "protocol" may refer to a standard protocol in the field of communication, may include, for example, an LTE protocol, an NR protocol, and related protocols applied to future communication systems, which is not limited in the present disclosure.

In order to facilitate understanding of the technical solutions of the embodiments of the present disclosure, the related technologies of the embodiments of the present disclosure will be described below, and the related technologies below may be arbitrarily combined with the technical solutions of the embodiments of the present disclosure as optional solutions, and all of them belong to the scope of protection of the embodiments of the present disclosure.

The data transmission of the Uu interface, that is, the air interface, between the access network device and the terminal device has two transmission manners.

The first transmission manner is transmitting data by using control signaling carried by a Signaling Radio Bearer (SRB) resource. For example, various types of Access Stratum (AS) configuration information are transmitted through Radio Resource Control (RRC) messages carried by the SRB or various types of Non Access Stratum (NAS) information are sent through NAS information containers included in the RRC messages.

The second transmission manner is transmitting data by using the packet data unit (PDU) carried by a Data Radio Bearer (DRB) resource. The data carried by the DRB is usually also called application layer data.

In order to adapt to the complexity and diversity of communication system scenarios, a large number of types of AI/ML models may be introduced into communication systems. Considering the capability limitations of terminal devices, it is a feasible solution to transmit AI/ML models from the network device to the terminal device. However, there is currently no standard solution on how to manage transmission of AI/ML models.

In order to facilitate understanding of the technical solutions of the embodiments of the present disclosure, the technical solutions of the present disclosure will be described in detail below with reference to specific examples. The above related technologies may be arbitrarily combined with the technical solutions of the embodiments of the present disclosure as optional solutions, and all of them belong to the scope of protection of the embodiments of the present disclosure. Embodiments of the present disclosure include at least part of the following contents.

The wireless communication method provided by the embodiments of the present disclosure is applied to a terminal device. As illustrated in FIG. 2, the method includes the following operation.

In operation S201, the terminal device receives the first information sent by the access network device. The first information includes information associated with the first model, and the first information is sent through a control message and/or through a data channel.

The wireless communication method provided by the embodiments of the present disclosure is applied to an access network device. As illustrated in FIG. 3, the method includes the following operation.

In operation S301, the access network device sends the first information to the terminal device. The first information includes information associated with the first model, and the first information is sent through a control message and/or through a data channel.

The wireless communication method provided by the embodiments of the present disclosure is applied to a communication system including a terminal device and an access network device. As illustrated in FIG. 4, the method includes the following operation.

In operation S401, the access network device sends the first information to the terminal device. The first information includes information associated with the first model, and the first information is sent through a control message and/or through a data channel.

Next, the wireless communication methods on the sides of the terminal device and the access network device provided by the embodiments of the present disclosure will be described.

The provider of the first model is a terminal device manufacturer, a network device manufacturer, a communication device operator, a chip manufacturer, or another third-party operator. The first model may be deployed on the terminal device. In an example, the first model is an AI model, ML model, or the like.

In some embodiments, the first model is a bilateral model deployed to operate on multiple devices. The operation of the bilateral model requires joint operation of the deployed models on the multiple devices to implement the function of the first model.

In the embodiments of the present disclosure, the information associated with the first model, that is, the first information, is stored in a network device such as a core network device or an access network device. When the access network device determines that it needs to send the first information to the terminal device to deploy the first model on the terminal device, the access network device sends the first information to the terminal device. After receiving the first information, the terminal device deploys the first model based on the received first information.

The first information includes at least one of: a model identifier of the first model; description information of the first model; or model algorithm data of the first model.

The model identifier of the first model is used to identify the first model.

The description information of the first model is used to describe the first model. The description information of the first model includes at least one of: a functional feature associated with the first model, type information of input parameters required by the first model, format requirement information of input parameters required by the first model, a preprocessing rule of input parameters required by the first model, type information of output parameters required by the first model, format requirement information of output parameters required by the first model, preprocessing rule of output parameters required by the first model, application scenario information of the first model, deployment location information of the first model, a capability requirement for usage of the first model algorithm, performance metric index information of the first model algorithm, home address information of the first model algorithm, effective use range information of the first model algorithm, generalization feature information of the first model algorithm, version number information of the first model algorithm data, precision level information of the first model algorithm, or compilation or storage format of the first model algorithm data.

The model algorithm data information of the first model is data of the first model itself, and may include at least one of: structure data or weight parameters of the algorithm adopted by the first model.

The first information is sent through a control message and/or through a data channel. The control message belongs to the message of the control plane. When the access network device sends the first information to the terminal device through the control message, the communication system uses the control plane resource of the air interface to transmit the first information. When the access network device sends the first information to the terminal device through the data channel, the communication system uses the user plane resource of the air interface to transmit the first information.

In the wireless communication method provided by the embodiments of the present disclosure, the access network device sends the first information to the terminal device through a control message or a data channel, so that the first information stored on the network side is sent to the terminal device through a control plane or a user plane, the terminal device can obtain the first information from the network side, and the first model is deployed on the terminal device under the condition that the capability limitation of the terminal device is satisfied. The process of deploying the first model by the terminal device is more flexible compared with the manner of presetting the information associated with the first model in the terminal device or acquiring the information associated with the first model through the model training process.

The access network device sends the first information to the terminal device by at least one of the following first sending manner or the second sending manner.

The first sending manner is sending the first information through the control message.

The second sending manner is sending the first information through the data channel.

For the first sending manner, the access network device sends the first information through a control message sent by the access network device.

In some embodiments, the operation S201 is implemented by the following operation. The terminal device receives the first message sent by the access network device. The first message carries the first information, and the first message is a control message sent by the access network device.

In this case, the operation S301 or S401 is implemented by the following operation. The access network device sends the first message to the terminal device. The first message carries the first information, and the first message is a control message sent by the access network device.

The access network device sends the first message to the terminal device. The first message carries the first information. After receiving the first message, the terminal device parses the first message to obtain the first information.

Here, the first message may also be understood as a signaling message.

In some embodiments, the control message sent by the access network device includes at least one of: RRC message; A Media Access Control Control Element (MAC CE) message; a Downlink Control Information (DCI) message; or the first dedicated control message.

The first dedicated control message is a control message, sent by the access network device, dedicated for the first information.

In the embodiments of the present disclosure, the first message carries the first information by at least one of the following first carrying manner, the second carrying manner or the third carrying manner.

The first carrying manner is that: all of the first information is included in the first information container included in the first message.

The second carrying manner is that: part of the first information is included in the first information container included in the first message.

The third carrying manner is that: all of the first information is included in the first message and the first information is not included in any information container.

In the first carrying manner, all of the first information is included in the first information container of the first message. In this case, all of the first information is included in the first information container and is transmitted on the air interface. After receiving the first message, the terminal device parses the first message to obtain the first information container, and obtains all of the first information from the first information container.

In the second carrying manner, part of the first information is included in the first information container of the first message. In this case, part of the first information is included in the first information container and is transmitted on the air interface. After receiving the first message, the terminal device parses the first message to obtain the first information container, and obtains part of the first information from the first information container.

In an example, the model algorithm data of the first model in the first information is included in the first information container of the first message.

In some embodiments, the first information container is a NAS information container or an AS information container. Alternatively, the AS information container may include an RRC information container.

In the third carrying manner, all of the first information is directly included in the first message. After receiving the first message, the terminal device parses the first message to directly obtain all of the first information.

In some embodiments, the access network device does not need to understand the detailed meaning of the information included in the first information. In a case that all or part of the first information is transmitted through the first information container, the access network device does not need to parse the meaning of the first information, thereby reducing the amount of calculation or operation on the access network device side, and improving the transmission security of the first information. In the third carrying manner, the access network device directly understands the detailed meaning of the information included in the first information, and thus directly adds the first information in the first message and sends the first message to the terminal device, and the terminal device parses the first message to directly obtain the first information, thereby reducing the amount of calculation or operation of the terminal device.

In some embodiments, when all of the first information is included in the first information container included in the first message or when part of the first information is included in the first information container included in the first message, the first message further includes model control information.

Here, the model control information is used to control and manage the first model. The function of controlling and management includes at least one of: activation of the first model, deactivation of the first model, deletion of the first model, switching of the first model, activation of a performance monitoring task of the first model, or the like.

For the first carrying manner, the first message further includes model control information, thus the model control information is included in the first information container included in the first message and the first message simultaneously, and the model control information is repeatedly sent in the first message, but the terminal device may obtain all the contents of the first information based on the first information container, and does not need to reorganize the first information.

For the second carrying manner, the first message further includes model control information, thus after receiving the first message, the terminal device may reorganize the information in the first information container and the model control information included in the first message to obtain the first information. In this case, the amount of data carried by the first information container is small, and transmission resources between the access network device and the terminal device can be saved.

In some embodiments, the model control information includes at least one of: a model identifier of the first model; or description information of the first model.

In the embodiments of the present disclosure, the first information is carried on at least one first message.

The access network device sends at least one first message to the terminal device. The at least one first message carries the first information. After receiving the at least one first message, the terminal device obtains the complete first information.

In some embodiments, the first information is carried as a whole on one first message.

In this case, the access network device sends one first message to the terminal device. After receiving the first message, the terminal device obtains the complete first information sent by the access network device.

In some embodiments, the first information is divided into at least two segments, and different segments are carried on different first messages of at least two first messages.

In this case, the access network device sends at least two first messages to the terminal device, and each of the first messages carries one segment of the first information. After receiving the at least two first messages, the terminal device reorganizes the segments carried by the respective first messages to obtain the complete first information sent by the access network device.

In some embodiments, for the first carrying manner, the condition that the first information is divided into at least two segments includes that the first information container included in a single first message cannot carry all of the first information. For the second carrying manner, the condition that the first information is divided into at least two segments includes that the first information container included in a single first message cannot carry all information of part of the first information. For the carrying manner, the condition that the first information is divided into at least two segments includes that a single first message cannot carry all of the first information.

In the embodiment of the present disclosure, when one first message or the first information container included in one first message cannot carry all of the first information sent by the access network device, the to-be-sent first information is divided into multiple segments, and the multiple segments are respectively carried in different first messages to be sent.

In some embodiments, the first message further carries at least one piece of the following segment indication information: segment serial number information of a segment carried on the first message; or first indication information used for indicating whether the segment carried on the first message is a last segment of the at least two segments.

The segment indication information is used to assist the terminal device in reorganizing the first information divided into multiple segments.

In some embodiments, the first message carries the segment indication information by the at least one of the following manners: the segment indication information is included in the first information container included in the first message; or the segment indication information is included in the first message and the segment indication information is not included in any information container.

In the embodiments of the present disclosure, a manner in which the first message carries the segment indication information may vary based on the different manners in which the first message carries the first information.

For the second sending manner, the access network device sends the first information through a data channel between the access network device and the terminal device, that is, the first data channel.

In some embodiments, the operation S201 is implemented by the following operation.

The terminal device receives the first data packet sent by the access network device. The first data packet includes the first information, and the first data packet is carried on the first data channel between the access network device and the terminal device.

In this case, the operation of S301 or S401 implemented by the following operation. The access network device sends the first data packet to the terminal device. The first data packet includes the first information, and the first data packet is carried on the first data channel between the access network device and the terminal device.

The access network device sends the first information to the terminal device on the first data channel, and the terminal device receives the first information on the first data channel.

Here, the first data channel may be understood as a data transmission channel established between the access network device and the terminal device. The first data packet transmitted through the first data channel may be understood as a PDU data packet or a user plane data packet transmitted between the access network device and the terminal device.

In some embodiments, a resource used by the first data channel includes at least one of the first air interface resource or the second air interface resource.

The first air interface resource is a DRB resource.

The second air interface resource is a radio bearer resource. The radio bearer resource is used for carrying the first information between the terminal device and the access network device.

The first air interface resource is a user plane resource between the access network device and the terminal device, such as the DRB resource.

The second air interface resource is a resource dedicated for transmitting the first information between the access network device and the terminal device, such as an AI/ML RB resource.

In some embodiments, the first information is divided into at least one first data block, and different first data blocks are included in different first data packets in at least one first data packet.

In the embodiments of the present disclosure, the access network device sends the first data packet through the first data channel, and when the first data packet includes the first information, the access network device may send at least one first data packet. The different first data packets in the at least one first data packet include different first data blocks divided in the first information.

If the access network device sends one first data packet, the first data packet includes all of the first information.

If the access network device sends multiple first data packets, the multiple first data packets include all of the first information. The terminal device obtains all of the first information through the received multiple first data packets.

In some embodiments, the condition that the first information is divided into at least two first data blocks includes that a single first data packet cannot carry all of the first information.

In some embodiments, the first data packet further includes the first data packet header. The first data packet header includes at least one of: a model identifier of the first model; block serial number information that is associated with the first data block included in the first data packet; or Quality of service (QoS) indication information that corresponds to the first data block comprised in the first data packet.

It may be understood that different first data blocks are associated with different pieces of block serial number information, and the block serial number information associated with the first data blocks may be used by the data reception end to reorganize the first information.

When the sending manner is the second manner, before sending the first information, the access network device further performs the following operation.

The access network device sends the second message to the terminal device. The second message is used for transmitting the first configuration information. The first configuration information is used for configuring a resource used by the first data channel, and the second message is a control message sent by the access network device.

In this case, the terminal device further performs the following operation.

The terminal device receives the second message. The second message is used for transmitting the first configuration information. The first configuration information is used for configuring a resource used by the first data channel. The second message is a control message sent by the access network device.

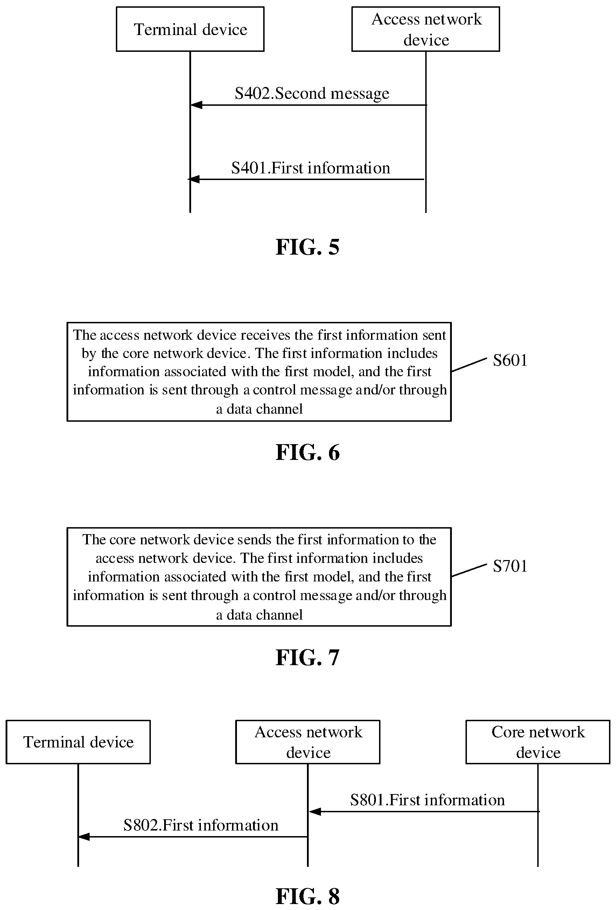

In a communication system including a terminal device and an access network device, as illustrated in FIG. 5, the method further includes the following operation.

In operation S402, the access network device transmits the second message to the terminal device.

In the embodiments of the present disclosure, before sending the first information through the first data channel, the access network sends the second message to the terminal device through the control plane resource to send configuration information corresponding to the resource used for establishing the first data channel. After receiving the second message, the terminal device configures the resource based on the first configuration information carried by the second message, and establishes the first data channel based on the configured resource.

In some embodiments, for the access network device, the access network device actively triggers the sending of the first information, or the access network device triggers the sending of the first information based on a request of the terminal device.

If the access network actively triggers the sending of the first information, the access network may trigger the sending of the first information when the access network determines that the first information needs to be sent based on the implementation of the access network.

If the access network triggers the sending of the first information based on the request of the terminal device, when the terminal device determines that the first information needs to be sent based on the implementation of the terminal device, the terminal device sends the first request to the access network device. The first request is used to request the sending of the first information. After receiving the first request, the access network device passively triggers the sending of the first information based on the first request.

In the embodiments of the present disclosure, the storage location of the first information on the network side includes one of the following the first storage location or the second storage location.

The first storage location is the access network device.

The second storage location is the core network device.

Taking the storage location of the first information being the first storage location as an example, after the access network device triggers the sending of the first information, the access network device locally obtains the first information and sends the first information to the terminal device.

The wireless communication method provided by the embodiments of the present disclosure is applied to an access network device. As illustrated in FIG. 6, the method includes the following operation.

In operation S601, the access network device receives the first information sent by the core network device. The first information includes information associated with the first model, and the first information is sent through a control message and/or through a data channel.

The wireless communication method provided by the embodiments of the present disclosure is applied to a core network device. As illustrated in FIG. 7, the method includes the following operation.

In operation S701, the core network device sends the first information to the access network device. The first information includes information associated with the first model, and the first information is sent through a control message and/or through a data channel.

For the first information illustrated in FIG. 6 and FIG. 7, the reference is made to the description of the first information in FIG. 2 and FIG. 3, which will not be repeated here.

It may be understood that the wireless communication method described in FIG. 6 or FIG. 7 may be implemented independently or in combination with the wireless communication method illustrated in FIG. 2 or FIG. 3.

In the wireless communication method provided by the embodiment of the present disclosure, the core network device sends the first information to the access network device through a control message or a data channel, so that the access network device can obtain the first information through the control plane or the user plane.

In a case that the wireless communication method illustrated in FIG. 6 is implemented in combination with the wireless communication method illustrated in FIG. 2 or FIG. 3, the wireless communication method provided by the embodiment of the present application is applied to a communication system including a terminal device, an access network device, and a core network device. As illustrated in FIG. 8, the method includes the following operations.

In operation S801, the core network device sends the first information to the access network device.

In operation S802, the access network device sends the first information received from the core network device to the terminal device.

Next, a wireless communication method for the core network device and the access network device will be described.

In some embodiments, the first information is stored in the core network device.

After the core network device triggers the sending of the first information, the core network device locally obtains the first information, and sends the first information to the access network device, and after receiving the first information, the access network device sends the received first information to the terminal device.

In the embodiment of the present disclosure, the core network device sends the first information to the access network device by at least one of the following third sending manner or the fourth sending manner.

The third sending manner is sending the first information through the control message.

The fourth sending manner is sending the first information through the data channel.

In the embodiment of the present disclosure, the first sending manner and the second sending manner for the access network device sending the first information to the terminal device may be combined with the third transmitting manner and the fourth sending manner for the core network device sending the first information to the access network device.

In an example, the access network device sends the first information to the terminal device by the first sending manner, and the core network device sending the first information to the access network device by the third sending manner.

In an example, the access network device sends the first information to the terminal device by the second sending manner, and the core network device sends the first information to the access network device by the third sending manner.

In an example, the access network device sends the first information to the terminal device by the first sending manner, and the core network device sends the first information to the access network device by the fourth sending manner.

In an example, the access network device sends the first information to the terminal device by the second sending manner, and the core network device sends the first information to the access network device by the fourth sending manner.

For the third sending manner, the core network device sends the first information through the control message sent by the core network device.

In some embodiments, the operation S302 is implemented by the following operation. The access network device receives the third message sent by the core network device. The third message carries the first information, and the third message is a control message sent by the core network device.

In this case, the operation S701 or S801 is implemented by the following operation. The core network device sends the third message to the access network device. The third message carries the first information, and the third message is a control message sent by the core network device. Here, the third message may also be understood as a signaling message sent by the core network device.

In some embodiments, the control message sent by the core network device includes at least one of: a NG interface message, a NAS message, a location control message, or the second dedicated control message.

The second dedicated control message is a control message, sent by the core network device and dedicated for the first information.

In an embodiment of the present disclosure, the third message carries the first information by at least one of the following fourth carrying manner, fifth carrying manner or the sixth carrying manner.

The fourth carrying manner is that: all of the first information is included in the second information container included in the third message.

The fifth carrying manner is that: part of the first information is included in the second information container included in the third message.

The sixth carrying manner is that: all of the first information is included in the third message, and the first information is not included in any information container.

In the fourth carrying manner, all of the first information is included in the second information container included in the third message. In this case, all of the first information is included in the second information container and is transmitted on the interface between the core network device and the access network device. After receiving the third message, the access network device obtains the second information container.

After acquiring the second information container, the access network device does not parse the content included in the second information container, and may forward the second information container to the terminal device by carrying the second information container in the first message. In this case, the second information container may also be understood as the first information container.

After acquiring the second information container, the access network device does not parse the content included in the second information container, may forward the second information container to the terminal device by encapsulating the second information container, and carrying the encapsulated second information container in the first message. In this case, the encapsulated second information container may be understood as the first information container.

Under the condition that the first information is transmitted through the information container, the access network device, as a relay device between the core network device and the terminal device, does not need to parse the content of the first information, and sends the first information included in the information container to the terminal device, thereby reducing the amount of calculation or operation of the access network device on the basis of improving the security of the first information.

In the fifth carrying manner, part of the first information is included in the second information container included in the third message. In this case, part of the first information is included in the second information container and is transmitted on the interface between the core network device and the access network device. After receiving the third message, the access network device obtains the second information container.

The processing for the second information container by the access network device may be the same as the processing for the second information container in the fourth carrying manner, which will not be repeatedly described here.

In an example, the model algorithm data of the first model in the first information is included in the second information container of the third message.

In some embodiments, the second information container is a NAS information container or an AS information container. Alternatively, the AS information container may include a RRC information container.

In the sixth carrying manner, all of the first information is included in the third message. After receiving the third message, the access network device parses the third message to directly obtain all of the first information.

After receiving all of the first information, the access network device may send all of the first information to the terminal device through the first sending manner or the second sending manner.

In some embodiments, if all of the first information is included in the second information container included in the third message or if part of the first information is included in the second information container included in the third message, the third message further includes model control information.

After receiving the model control information, the access network device may control and manage the first model through the model control information. The function of controlling and management includes at least one of: activation of the first model, deactivation of the first model, deletion of the first model, switching of the first model, activation of a performance monitoring task of the first model, or the like.

In the fourth carrying manner, the third message further includes model control information. The model control information is included in the second information container included in the third message and the third message simultaneously. Although there is repeated data transmission, the access network device can directly obtain the model control information based on the third message, and can forward the second information container to the terminal device, so that the terminal device can obtain all of the first information, thereby reducing the amount of calculation and operation of the access network device.

In the fifth carrying manner, the third message further includes model control information, the second information container included in the third message may not include the model control information, and the access network device directly obtains the model control information based on the third message after receiving the third message. In this case, the amount of data carried by the second information container is small, and transmission resources between the access network device and the terminal device can be saved, and the access network device can quickly obtain the model control information to control and manage the first model.

In an embodiment of the present disclosure, the first information is carried on at least one third message.

The core network device sends at least one third message to the access network device. The at least one third message carries the first information. The access network device obtains complete first information after receiving the at least one third message.

In some embodiments, the first information is carried as a whole on one third message.

In this case, the core network device sends one third message to the access network device, and after receiving the third message, the access network device obtains the complete first information sent by the core network device.

In some embodiments, the first information is divided into at least two segments, and different segments are carried on different third messages in at least two third messages.

In this case, the core network device sends at least two third messages to the access network device, and each of third messages carries one segment of the first information. After receiving the at least two third messages, the access network device reorganizes the segments carried by respective third messages to obtain the complete first information sent by the core network device.

In some embodiments, for the fourth carrying manner, the condition that the first information is divided into at least two segments includes that the second information container included in a single third message cannot carry all of the first information. For the fifth carrying manner, the condition that the first information is divided into at least two segments includes that the second information container included in a single third message cannot carry all information of part of the first information. For the sixth carrying manner, the condition that the first information is divided into at least two segments includes that a single third message cannot carry all of the first information.

In the embodiment of the present disclosure, when one third message or the second information container included in one third message cannot carry all of the first information sent by the core network device, the to-be-sent first information is divided into multiple segments, and the multiple segments are respectively carried in different third messages to be sent.

In some embodiments, the third message further carries at least one of the following segment indication information: segment serial number information of the segment carried on the third message; or second indication information used for indicating whether the segment carried on the third message is a last segment of the at least two segments.

In some embodiments, the third message carries the segment indication information by at least one of the following manners.

The segment indication information is included in the second information container included in the third message.

The segment indication information is included in the third message and the segment indication information is not included in any information container.

The manner for the third message carrying the segment indication information may be referred to as the manner for the first message carrying the segment indication information, which will not be repeated here.

In an example, the segment indication information carried by the third message is the same as or different from the segment indication information carried by the first message.

After receiving the segment indication information included in the third message, the access network device directly forwards the segment indication information to the terminal device, or the access network device reallocates the new segment indication information, and sends the reallocated new segment indication information to the terminal device. After receiving the second information container including the segment indication information in the third message, the access network device sends the second information container to the terminal device directly through the first message, or the access network device sends the encapsulated second information container to the terminal device through the first message.

For the fourth sending manner, the core network device sends the first information through a data channel between the core network device and the access network device, that is, the second data channel.

In some embodiments, the operation S302 is implemented by the following operation.

The access network device receives the second data packet sent by the core network device. The second data packet includes the first information. The second data packet is carried on the second data channel between the access network device and the core network device.

In this case, the operation S701 or S801 is implemented by the following operation.

The core network device sends the second data packet to the access network device. The second data packet includes the first information. The second data packet is carried on the second data channel between the access network device and the core network device.

The core network device sends the first information to the access network device on the second data channel, and the access network device receives the first information on the second data channel.

Here, the second data channel may be understood as a data transmission channel established between the access network device and the core network device. The second data packet transmitted by the second data channel may be understood as a PDU data packet or a user plane data packet transmitted between the access network device and the core network device.

In some embodiments, a resource used by the second data channel includes at least one of the first interface resource or the second interface resource.

The first interface resource is an interface data channel resource.

The second interface resource is an interface bearer resource. The interface bearer resource is used for carrying the first information between the core network device and the access network device.

The first interface resource is a user plane resource between the access network device and the core network device.

The second interface resource is a resource dedicated for transmitting the first information between the access network device and the core network device.

In some embodiments, the first information is divided into at least one second data block, and different second data blocks are included in different second data packets in at least one second data packet.

In the embodiment of the present disclosure, the core network device sends the second data packet through the second data channel, and when the second data packet includes the first information, the core network device may sends at least one second data packet. Different second data packets in the at least one second data packet include different second data blocks divided in the first information.

If the core network device sends one second data packet, the second data packet includes all of the first information.

If the core network device sends multiple second data packets, the multiple second data packets include all of the first information. The access network device obtains all of the first information through the received multiple second data packets.

In the embodiment of the present disclosure, after receiving the second data packet, the access network device may directly forward the second data packet to the terminal device. In this case, the first data packet and the second data packet may be understood as the same data packet.

In some embodiments, the condition that the first information is divided into at least two second data blocks includes that a single second data packet cannot carry all of the first information.

In some embodiments, the second data packet further includes at least one of the second data packet header or channel data header information.

The second data packet header is associated with the second data block included in the second data packet.

The channel data header information is associated with the first information or a associated with a session identifier associated with the first information.

The second data packet header may be used to identify the second data block included in the second data packet.

The channel data header information may be used to identify the information transmitted by the second data channel as the first information.

In some embodiments, the second data packet header includes at least one of: a model identifier of the first model; block serial number information that is associated with the second data block included in the second data packet; or Quality of service (QoS) indication information that corresponds to the second data block included in the second data packet.

It may be understood that different second data blocks are associated with different block serial number information, and the block serial number information associated with the second data blocks may be used for the data reception end to reorganize the first information.

When the sending manner is the fourth manner, before sending the first information, the core network device further performs the following operation.

The core network device sends the fourth message to the access network device. The fourth message is used for requesting a resource used to establish the second data channel. The fourth message is a control message sent by the core network device.

In this case, the access network device further performs the following operation.

The access network device receives the fourth message sent by the core network device. The fourth message is used for requesting a resource used to establish the second data channel. The fourth message is a control message sent by the core network device.

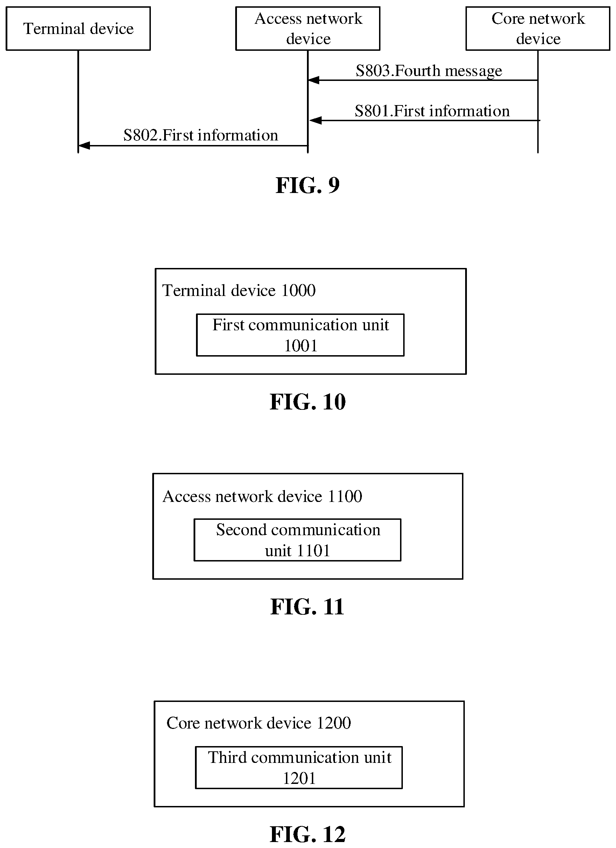

As illustrated in FIG. 9, before the operation S801, the method further includes the following operation.

In operation S803, the core network device sends the fourth message to the access network device.

In the embodiment of the present disclosure, before sending the first information through the second data channel, the core network device sends the fourth message to the access network device through the control plane resource to request the access network device to establish a resource corresponding to the second data channel. After receiving the fourth message, the access network device determines whether to accept the request to establish the second data channel resource triggered by the core network device, and allocates the resource for the second data channel to establish the second data channel when the request to establish the second data channel resource triggered by the core network device is accepted.

In some embodiments, the access network device sends the second message to the terminal device to establish the first data channel between the access network device and the terminal device when the request to establish the second data channel resource triggered by the core network device is accepted.

In some embodiments, the access network device sends the sixth message to the core network device. The sixth message is used to indicate whether the access network device accepts the request to establish the second data channel resource triggered by the core network device.

In a case where the sixth message is used to indicate that the access network device accepts the request to establish the second data channel resource triggered by the core network device, the core network device sends the first information to the access network device.

The sixth message is a control message received by the core network device.

In some embodiments, the control message received by the core network device includes at least one of: a NG interface message; an NAS message; a location control message; or the third dedicated control message.

The third dedicated control message is a control message, received by the core network device and dedicated for controlling the transmission of the first information.

In some embodiments, when the sixth message is used to indicate that the access network device accepts the request to establish the second data channel resource triggered by the core network device, the sixth message includes the second address. The second address is an address for downlink data transmission and allocated by the access network device for the second data channel.

The core network device determines the second data channel based on the second address included in the sixth message.

It may be understood that the first address is an address corresponding to transmitting uplink data on the second data channel, and the second address is an address corresponding to transmitting downlink data on the second data channel.

In some embodiments, the fourth message includes at least one of: a session identifier associated with the first information; a model identifier of the first model; description information of the first model; a flow identifier corresponding to a QoS flow associated with the first information; the first number; the first address; or Channel data header information. The first number is a number of suggested RB resources. The first address is an address for uplink data transmission and allocated by the core network device for the second data channel. The channel data header information is associated with the first information or associated with a session identifier associated with the first information.

It is understood that the fourth message carries at least one of: a session identifier associated with the first information; a model identifier of the first model; description information of the first model; a flow identifier corresponding to a QoS flow associated with the first information; or channel data header information. The channel data header information is associated with the first information or associated with a session identifier associated with the first information. The access network device is able to determine that the currently established second data channel is used for transmitting the first information or used for transmitting the information associated with the first model based on the information carried by the fourth message.

It may be understood that the channel data header information is used to identify that the current second data channel is used for transmitting the first information, and the channel data header information may be included in at least one of the fourth message or the second data packet.

In some embodiments, the channel data header information includes at least one of: a model identifier of the first model; description information of the first model; channel port information; or channel address information.

In some embodiments, the fourth message is actively triggered by the core network device, or the fourth message is triggered by the core network device based on a request of the terminal device, or the fourth message is triggered by the core network device based on a request of the access network device.

In some embodiments, for the core network device, the sending of the first information is actively triggered by the core network device, or the sending of the first information is triggered by the core network device based on a request of the terminal device, or the sending of the first information is triggered by the core network device based on a request of the access network device.

In a case that the core network actively triggers the sending of the first information, the core network device may trigger the sending of the first information when the core network device determines that the first information needs to be sent based on the implementation of the core network device.

In a case that the core network device triggers the sending of the first information based on the request of the access network device, the access network device sends the second request to the core network device when the access network device determines that the first information needs to be sent based on the implementation of the access network device. The second request is used to request the sending of the first information. After receiving the second request, the core network device passively triggers the sending of the first information based on the second request.

In a case that the core network device triggers the sending of the first information based on the request of the terminal device, the terminal device sends the third request to the core network device through the access network device when the terminal device determines that the first information needs to be sent based on the implementation of the terminal device. The third request is used to request the sending of the first information. After receiving the third request, the core network device passively triggers the sending of the first information based on the third request.

In some embodiments, after the core network device completes the transmission of all of the first information to the terminal device, the core network device further performs the following operation.

The core network device sends the fifth message to the access network device. The fifth message is used to indicate that the first information is successfully received by the terminal device or the fifth message is used to indicate that the first information is transmitted completely. The fifth message is a control message sent by the core network device.

In some embodiments, the core network device sends the seventh message to the access network device. The seventh message is used to indicate that the first information is not successfully received by the terminal device or the seventh message is used to indicate that the first information is transmitted unsuccessfully.

In this case, the access network device further performs the following operation.

The access network device receives the fifth message sent by the core network device. The fifth message is used to indicate that the first information is successfully received by the terminal device or the fifth message is used to indicate that the first information is transmitted completely. The fifth message is a control message sent by the core network device.

When the core network device determines that the first information is transmitted completely or the first information is successfully received by the terminal device, the core network device sends the fifth message to the access network device. It may be understood that when the access network device receives the fifth message, the access network device may release the resource used by the first data channel and/or the resource used by the second data channel.

In the embodiment of the present disclosure, before the access network device sends the first information to the terminal device, at least one of the registration process or an authentication process is further triggered.

The registration process is used to verify a validity of the first information and/or to register information included in the first information. The information registration for the information included in the first information may be used for subsequent management of the first information. The authentication process is used to verify an identity validity for obtaining the first information by the terminal device and/or to perform charging registration for obtaining the first information by the terminal device.

Taking the access network device triggering the registration process as an example, the access network device further performs the following operation.

The access network device triggers the registration process for the first information. The registration process is used to verify the validity of the first information and/or to register the information included in the first information.

If the access network device triggers the registration process for the first information, the first information is able to be transmitted on the air interface only after the access network device verifies the validity of the first information based on the triggered registration process, and the verification is passed and/or information registration is performed. When the verification for the validity of the first information is passed and/or the first information is not registered, the first information is not allowed to be transmitted on the air interface.

The registration process is performed by the access network device or the core network device.

It may be understood that if the registration process is performed by the access network device, the access network device further performs the following operation.

The access network device performs the registration process. The registration process is used to verify the validity of the first information and/or to register information included in the first information.

It may be understood that if the registration process is performed by the core network device, the core network device further performs the following operation.

The core network device performs the registration process. The registration process is used to verify the validity of the first information and/or to register information included in the first information.

After performing the registration process, the core network may send the result of the registration process to the access network device, and the access network device may determine the validity of the first information and/or determine that the registration of the first information is completed based on the result of the registration process.

Taking the access network device triggering the authentication process as an example, the access network device further performs the following operation.

The access network device triggers an authentication process for the terminal device. The authentication process is used to verify the identity validity for obtaining the first information by the terminal device and/or to perform charging registration for obtaining the first information by the terminal device.

If the access network device triggers an authentication process for the terminal device, after the access network device verifies the identity validity of the terminal device and/or performs charging registration based on the triggered authentication process, when the verification for the identity validity of the terminal device is passed, the access network device sends the first information to the terminal device and/or starts the charging process. The first information has been registered and/or the verification for the validity of the first information is passed. When the verification for the identity validity of the terminal device is not passed, the access network device is not allowed to send the first information to the terminal device.

The authentication process is performed by the access network device or the core network device.

It may be understood that if the authentication process is performed by the access network device, the access network device further performs the following operation.

The access network device performs the authentication process. The authentication process is used to verify the identity validity for obtaining the first information by the terminal device and/or to perform charging registration for obtaining the first information by the terminal device.

It may be understood that if the authentication process is performed by the core network device, the core network device further performs the following operation.

The core network device performs the authentication process. The authentication process is used to verify the identity validity for obtaining the first information by the terminal device and/or to perform charging registration for obtaining the first information by the terminal device.

After performing the authentication process, the core network may send the result of the authentication process to the access network device and/or start the charging process. The access network device may determine the identity validity for obtaining the first information by the terminal device based on the result of the authentication process.

In the wireless method provided by the embodiment of the present disclosure, the access network device triggers a registration process and/or an authentication process before sending the first information stored by the access network device or the received first information, so as to determine the validity of the first information by triggered the registration process, and/or determine the identity validity of the terminal device receiving the first information by the triggered authentication process, thereby ensuring the secure sending of the first information, and the security of the deployment of the first model.

Hereinafter, the wireless communication method provided by the embodiment of the present disclosure will be further described by taking the first model as an AI/ML model as an example.

The embodiment of the present disclosure may be implemented as, but is not limited to, the following embodiment based on whether the information of the first model is stored in the core network device or the access network device.

Embodiment 1: When the information related to AI/ML model (the information related to AI/ML model corresponds to the above first information) is stored in the core network device, there are several possible methods for the terminal device to obtain the information related to AI/ML model from the core network device as follows.

The first method is that the terminal device obtains information related to AI/ML model from the core network device through the control message of the core network device.

The communication between the terminal device and the core network device is indirectly implemented through the access network device. That is, the terminal device firstly sends the information that is to be sent to the core network device to the access network device through the air interface SRB resource, and after the access network device successfully receives the information, the access network device sends the information that needs to be sent to the core network device to the core network device through the interface control message, and vice versa.

In the first method, the core network device sends the third message to the access network device. The third message includes information related to AI/ML model.

The first method may be implemented by the following three possible implementation manners.

The first manner is that all of information related to AI/ML model is transmitted through the second information container of the third message.

In the first manner, all of the information related to AI/ML model is transmitted as a whole to the access network device through the second information container included in the third message, and the access network device does not need to decode the information content in the second information container after successfully receiving the second information container included in the third message, but transmits the second information container to the terminal device through the control message carried by the air interface SRB resource.

If the second information container included in one third message cannot completely carry all of the information related to AI/ML model, all of the information related to AI/ML model is allowed to be transmitted in segments. That is, all of the information related to AI/ML model to be transmitted is divided into several segments. Each segment is transmitted through the first information container included in one third message.

The second manner is that part of the information related to AI/ML model is transmitted through the second information container of the third message.

In the second manner, part of the information related to AI/ML model (for example, part of information including algorithm data information of the AI/ML model and AI/ML model description information) is transmitted to the access network device through the second information container included in the third message. The access network device does not need to decode the information content in the first information container after successfully receiving the second information container included in the third message, but transmits the second information container to the terminal device through the control message carried by the air interface SRB resource.

If the first information container included in one third message cannot completely carry all information of the part of the information related to AI/ML model, the part of the information related to AI/ML model is allowed to be transmitted in segments. That is, all of the information related to AI/ML model to be transmitted is divided into several segments. Each segment is transmitted through the first information container included in one third message.

For the first manner and second manner, the third message further includes AI/ML model control information. The AI/ML model control information includes all or part of the AI/ML model identifier (ID) and/or AI/ML model description information.

The AI/ML model control information is not included in the second information container included in the third message. The AI/ML model control information may be parsed by the access network device, and the access network device may control and manage the corresponding AI/ML model obtained by the terminal device based on the AI/ML model control information, such as, activating and deactivating the AI/ML model deployed by the terminal device, activating a performance monitoring task of the AI/ML model deployed by the terminal device, and the like.

The third manner is that all of the information related to AI/ML model is directly transmitted through the third message.

In the third manner, the information related to AI/ML model is not transmitted through the information container, and the access network device may directly understand all of the information related to AI/ML model included in the third message through the content of the third message. Of course, if one third message cannot completely carry all of the information related to AI/ML model, segmented transmission is allowed.

In some embodiments, for the above first manner, the second manner or the third manner, the third message further includes segment serial number information and/or indication information indicating whether the segment is the last segment. The segment serial number information is used to indicate the information to be transmitted in the current third message is which segment of all of the information that needs to be transmitted, and the indication information indicating whether the segment is the last segment is used to indicate whether the information to be transmitted in the current third message is the last segment of all of the information that needs to be transmitted. The segment serial number information and/or the indication information indicating whether the segment is the last segment is able to assist the terminal device in reorganizing the information related to AI/ML model.

For the above first manner, the second manner or the third manner, the segment serial number information and/or the indication information indicating whether the segment is the last segment is included only in the second information container, or the segment serial number information and/or the indication information indicating whether the segment is the last segment is simultaneously included in other information field other than the first information container in the first information and the first information container, or the segment serial number information and/or the indication information indicating whether the segment is the last segment is included in the third message but not included in the first information container, that is, the segment serial number information and/or the indication information indicating whether the segment is the last segment is included in other information field other than the first information container in the first information.

In some embodiments, for the first manner, the second manner or the third manner, the third message is actively triggered by the core network device, or the third message is triggered by the core network device after the terminal device requests the core network device, or the third message is triggered by the core network device after the access network device requests the core network device.

In some embodiments, for the first manner, the second manner or the third manner, the core network device sends the fifth message to the access network device. The fifth message includes an AI/ML model ID. The fifth message is used to notify the access network device of the AI/ML model ID successfully received by the terminal device.

The second method is that the terminal device obtains information related to AI/ML model from the core network device through the data stream (data packet) generated by the core network device.

For the second method, the core network device needs to request the access network device to establish a resource (for example, to establish an air interface DRB resource or an AIRB resource or an interface data channel resource) for transmission of the information related to AI/ML model.

The core network device sends the fourth message to the access network device. The fourth message is used to request the access network device to establish a resource for transmission of the information related to AI/ML model. The fourth message includes at least one of: a session identifier associated with the information related to AI/ML model to be transmitted; an AI/ML model identifier associated with the information related to AI/ML model to be transmitted; description information associated with information related to AI/ML model to be transmitted; at least one QoS flow identifier associated with the information related to AI/ML model to be transmitted; number of RBs suggested to be established; channel address information established for uplink data transmission and allocated by the core network device; or channel data header information. The channel data header information includes at least one of: AI/ML model identifier, description information, channel port information, or channel address information associated with the transmitted information related to AI/ML model.

In some embodiments, the core network device receives the sixth message sent by the access network device. The sixth message is used to indicate that the resource establishment request triggered by the fourth message is rejected or the sixth message is used to indicate that the resource establishment request triggered by the fourth message is accepted. When the sixth message indicates that the resource establishment request triggered by the fourth message is accepted, the sixth message includes channel address information established for downlink data transmission and allocated by the access network device.

In some embodiments, the core network device transmits the information related to AI/ML model to the access network device through the established data channel.

In some embodiments, the information related to AI/ML model transmitted through the data channel further includes channel data header information. The channel data header information includes at least one of: an AI/ML model identifier, description information of the AI/ML model, channel port information, or channel address information associated with the transmitted information related to AI/ML model.

In some embodiments, before transmitting the information related to AI/ML model to the access network device through the established data channel, the core network device further performs at least one of the following operations: splitting the information related to AI/ML model to be transmitted into several data blocks; adding a data packet header for each split data block; or adding channel data header information for each split data block.

In some embodiments, the data packet header includes AI/ML model identifier and/or data block serial number information associated with the transmitted information related to AI/ML model.

In some embodiments, the fourth message is actively triggered by the core network device, or the fourth message is triggered by the core network device after the terminal device requests the core network device, or the fourth message is triggered by the core network device after the access network device requests the core network device.

In some embodiments, before transmitting the information related to AI/ML model through the control message or the data stream, the core network device performs authentication on the terminal device. The information related to AI/ML model is transmitted to the terminal device through the control message or the data stream after the authentication process is passed.

The authentication process is used to verify whether the terminal device is qualified to obtain the corresponding information related to AI/ML model from the core network device. If the authentication process is not passed, the core network device will not transmit the corresponding information related to AI/ML model to the terminal device through the control message or the data stream. At least one set of information related to AI/ML model may be authenticated by one time of authentication process.

At least one of the above third message to sixth message is a NG interface message, a NAS message or a location control message (for example, an LPP message).

The core network device includes one of the following: Access and Mobility Management Function (AMF) network element, Authentication Server Function (AUSF) network element, User Plane Function (UPF) network element, Session Management Function (SMF) network element, Location Management Function (LMF) network element, Policy Control Function (PCF) network element, unified data management (UDM) network element, and functional entities dedicated to managing information related to AI/ML model.

Embodiment 2: When the information related to AI/ML model is stored in the access network device, there are several possible methods for the terminal device to obtain the information related to AI/ML model from the access network device.

The first method is that the terminal device obtains information related to AI/ML model from the access network device through the control message sent by the access network device.

In the first method, the access network device sends the first message to the terminal device. The first message includes the information related to AI/ML model. The first method may be implemented by the following three possible implementation manners.

The first manner is that all of information related to AI/ML model is transmitted through the first information container of the first message.

In the first manner, all of the information related to AI/ML model is transmitted as a whole to the terminal device through the first information container included in the first message. Of course, if the first information container included in one first message cannot completely carry all of the information related to AI/ML model, segmented transmission is allowed. That is, all of the information related to AI/ML model to be transmitted is divided into several segments. Each segment is transmitted through the first information container included in one first message.

The second manner is that part of information related to AI/ML model is transmitted through the first information container of the first message.

In the second manner, part of the information related to AI/ML model (for example, part of information including algorithm data information of the AI/ML model and AI/ML model description information) is transmitted to the terminal device through the first information container included in the first message. Of course, if the first information container included in the first message cannot completely carry all information of the part of the information related to AI/ML model, segmented transmission is allowed.

In some embodiments, for the first manner and the second manner, the first message further includes AI/ML model control information. The AI/ML model control information includes all or part of the AI/ML model ID and/or AI/ML model description information.

The AI/ML model control information is not included in the first information container included in the first message. The AI/ML model control information may be directly understood by the terminal device. The terminal device may control and manage the corresponding AI/ML model obtained by the terminal device itself based on the information, such as activating or deactivating the AI/ML model deployed by the terminal device itself, activating a performance monitoring task of the AI/ML model deployed by the terminal device itself, and the like.

The third manner is that all of the information related to AI/ML model is directly included in the first message.

In the third manner, the information related to AI/ML model is not transmitted through the information container, and the terminal device may directly understand all or part of the information related to AI/ML model included in the first message through the content of the first message. Of course, if one first message cannot completely carry all of the information related to AI/ML model, segmented transmission is allowed.

In some embodiments, for the above first manner, the second manner and the third manner, the first message further includes segment serial number information and/or indication information indicating whether the segment is the last segment. The segment serial number information is used to indicate the information to be transmitted in the current first message is which segment of all of the information that needs to be transmitted, and the indication information indicating whether the segment is the last segment is used to indicate whether the information to be transmitted in the current first message is the last segment of all of the information that needs to be transmitted. The segment serial number information and/or the indication information indicating whether the segment is the last segment is able to assist the terminal device in reorganizing the information related to the AI/ML model.

For the above first manner, the second manner and the third manner, the segment serial number information and/or the indication information indicating whether the segment is the last segment is included only in the first information container, or the segment serial number information and/or the indication information indicating whether the segment is the last segment is simultaneously included in other information field other than the first information container in the first information and the first information container, or the segment serial number information and/or the indication information indicating whether the segment is the last segment is included in the third message but not included in the first information container, that is, the segment serial number information and/or the indication information indicating whether the segment is the last segment is included in other information field other than the first information container in the first information.

In some embodiments, for the first manner, the second manner and the third manner, the first message is actively triggered by the access network device, or the first message is triggered by the access network device after the terminal device requests the access network device.

The second method is that the terminal device obtains information related to the AI/ML model from the access network device through the data stream (data packet) generated by the access network device.

For the second method, the access network device needs to establish an air interface resource (for example, to establish an air interface DRB or AIRB resource) for transmission of the information related to AI/ML model. That is, the access network device provides configuration information required for transmission of the information related to AI/ML model to the terminal device through the second message.

In some embodiments, before transmitting the information related to AI/ML model to the terminal device through the established air interface resource, the access network device further performs the following operations: splitting the information related to AI/ML model to be transmitted into several data blocks; and/or adding a data packet header for each split data block.

In some embodiments, the data packet header includes AI/ML model identifier and/or data block serial number information associated with the transmitted information related to AI/ML model.

In some embodiments, the second message is actively triggered by the access network device, or the second message is triggered by the access network device after the terminal device requests the access network device.

In some embodiments, for the first method and the second method, before transmitting the information related to AI/ML model through the control message or data stream, the access network device further performs authentication on the terminal device. The information related to AI/ML model is transmitted to the terminal device through the control message or data stream after the authentication process is passed.

The authentication process is used to verify whether the terminal device is qualified to obtain the corresponding information related to AI/ML model from the access network device. If the authentication process is not passed, the access network device will not transmit the corresponding information related to AI/ML model to the terminal device through the control message or the data flow. At least one set of information related to AI/ML model may be authenticated by one time of authentication process.

In some embodiments, for the first method and the second method, the authentication process is performed locally in the access network, or after the access network device requests the core network device to perform the authentication process, the core network device notifies the access network device of the authentication result.

In some embodiments, for the first method and the second method, each set of information related to AI/ML model stored by the access network device should pass the registration process before the set of information related to AI/ML model is used for air interface transmission. That is, only the information related to AI/ML model that is passed for the registration process is able to be transmitted on the air interface. Otherwise, the information related to AI/ML model that is not passed for the registration process is not allowed to be transmitted on the air interface. Alternatively, the registration process is performed locally in the access network, or after the access network device requests the core network device to perform the registration process, the core network device notifies the access network device of the registration result.

The first message or the second message is a RRC message, a MAC CE message, a DCI message, or an AI/ML dedicated message.

In the embodiment of the present disclosure, the information related to AI/ML model at least includes algorithm data information of the AI/ML model itself (such as structure data and weight parameters of the algorithm corresponding to the AI/ML model). Alternatively, the information related to AI/ML model further includes an AI/ML model ID and/or AI/ML model description information.

The AI/ML model description information includes at least one of: a functional feature associated with the AI/ML model, type information of input parameters required by the AI/ML model, format requirement information of input parameters required by the AI/ML model, a preprocessing rule of input parameters required by the AI/ML model, type information of output parameters required by the AI/ML model, format requirement information of output parameters required by the AI/ML model, a preprocessing rule of output parameters required by the AI/ML model, application scenario information of the AI/ML model, deployment location information of the AI/ML model, a capability requirement for usage of the AI/ML model algorithm, performance metric index information of the AI/ML model algorithm, home address information of the AI/ML model algorithm, effective use range information of the AI/ML model algorithm, generalization feature information of the AI/ML model algorithm, version number of the AI/ML model algorithm data, precision level information of the AI/ML model algorithm, or compilation or storage format of the AI/ML model algorithm data.

Hereinafter, the meaning of each piece of information in the description information of the AI/ML model will be described.

The first information: functional feature associated with AI/ML model.

The functional feature associated with the AI/ML model is used to indicate the function associated with the corresponding AI/ML model. For example, AI/ML model 1 is used for Channel State Information (CSI) compression feedback, AI/ML model 2 is used for mobility enhancement, AI/ML model 3 is used for beam prediction, and AI/ML model 4 is used for location, etc.

The second information: type information of input parameters required by the AI/ML model.

The type information of input parameters required by the AI/ML model is used to indicate the type of input parameters required by the corresponding AI/ML model. For example, the AI/ML model 1 is used for the CSI compression feedback, and the type of input parameters required by the AI/ML model 1 includes channel measurement results before channel estimation, channel measurement results after channel estimation, channel impulse response matrix obtained based on channel measurement results, and the like.

For another example, the AI/ML model 3 is used for the beam prediction, and the type of input parameters required by the AI/ML model 3 includes index information of actual measurement beams, signal measurement result information of various beams obtained by actual measurement, and the like.

The third information: format requirement information of input parameters required by the AI/ML model.

The format requirement information of input parameters required by the AI/ML model is used to indicate the format of the input parameters required by the corresponding AI/ML model. For example, the AI/ML model 3 is used for the beam prediction, and it is assumed that the network device may schedule resources in eight beam directions, but only sends measurement reference signals in four beam directions, the terminal device can only obtain measurement results of four beams in each time of measurement process. In the first scenario, the beam prediction AI/ML model only predicts signal measurement results for other beams that are not measured at the current time. If the beam prediction AI/ML model used in the first scenario only needs to input the measurement results of four beams, the measurement results of the four beams obtained by each time of measurement of the terminal device may be used as the input of the beam prediction AI/ML model in the first scenario (the output is the measurement results of the eight beams associated with this time of measurement, that is: four true values, four predicted values, or the output is the predicted measurement results of the four beams). In the second scenario, the beam prediction AI/ML model is used to predict the measurement results of eight beams in a future period of time. The input of the beam prediction AI/ML model in this scenario may be a set of measurement results of four beams obtained in the past N times of measurement processes, and the output of the beam prediction AI/ML model may be a set of measurement results of eight beams in a future period of time. For example, the input of the beam prediction AI/ML model is a set of three groups of measurement results of four beams obtained at times T-3, T-2, and T-1, and the output of the beam prediction AI/ML model is a set of two groups of measurement results of eight beams obtained at times T and T+1.

To sum up, when the measurement results of the four measured beams are used for beam prediction (the type of input data of model is the same), the formats of input data required for different application scenarios are different. Therefore, the format requirement information of input parameters required by the AI/ML model is also one piece of the key information to describe an AI/ML model.

The fourth information: a preprocessing rule of input parameters required by the AI/ML model.

The preprocessing rule of input parameters required by the AI/ML model is used to indicate how to reprocess the input data set corresponding to the AI/ML model. The operations involved in the reprocessing process may include at least one of data dimensionality reduction, data dimensionality upgrade, redundancy elimination, or redistribution.

Data dimensionality reduction: If the dimension of the data is higher than the dimension required for input of the model, the data dimensionality reduction of the data needs to be performed through the preprocessing rule before inputting the data into the model.

Data dimensionality upgrade: If the dimension of the data is lower than the dimension required for input of the model, the data dimensionality upgrade of the data needs to be performed through the preprocessing rule before inputting the data into the model.

Redundancy elimination: If the distribution or information amount of multiple groups of data is almost the same, the redundancy elimination of the data needs to be performed through the preprocessing rule before inputting the data into the model because redundant data often does not bring more performance improvements but increases invalid operations.

Redistribution: In some cases, it is difficult to obtain good model generalization for models obtained by putting data with little difference in feature information together for model training. Redistributing data with different pieces of feature information is beneficial to obtaining a model with better generalization.

For example, for first scenario regarding the third information, the terminal device may obtain measurement results for four of eight beams in cell A, the terminal device may obtain measurement results for five of eight beams in cell B, and the terminal device may obtain measurement results for three of eight beams in cell C. If it is expected to use the same beam prediction AI/ML model in cells A, B and C for beam prediction(only the measurement results of four beams are needed for input), the measurement results in cell A may be directly used, but the measurement results obtained in cell B need to be performed by data dimensionality reduction. That is, four measurement results are selected from the five available measurement results of beams as the input parameters required by the AI/ML model. The measurement results obtained in cell C need to be performed by data dimensionality upgrade. That is, the three available measurement results of beams are changed into four measurement results of beams to obtain input parameters required by the AI/ML model.

In another implementation manner, at least two pieces of the second information, the third information, or the fourth information may be defined in combination, which is not limited in the present disclosure.

The fifth information: type information of output parameters required by the AI/ML model.

The type information of output parameters required by the AI/ML model is used to indicate the type of output parameters required by the corresponding AI/ML model. For example, the AI/ML model 3 is used for the beam prediction, and the corresponding type of output parameters includes index information of actual unmeasured beams, predicted signal measurement result information of actual unmeasured beams, and the like.

The sixth information: format requirement information of output parameters required by the AI/ML model.

The format requirement information of output parameters required by the AI/ML model is used to indicate the format of the output parameters required by the corresponding AI/ML model. For example, the AI/ML model 3 is used for the beam prediction, and the output parameters may be beam prediction results at one time in the future or the output parameters may be a set of beam prediction results at multiple times in the future. For example, the input of model is a set of three groups of measurement results of four beams obtained at times T-3, T-2, and T-1, and the output of model may be a set of measurement results of eight beams at time T, or a set of two groups of measurement results of eight beams at time T and time T+1.

To sum up, the future beam measurement results are predicted (the type of output data of model is the same), the corresponding formats of output data required by AI/ML model 3 are different in different application scenarios. Therefore, the format requirement information of output parameters required by AI/ML model is also one piece of the key information to describe an AI/ML model.

The seventh information: a preprocessing rule for output parameters required by AI/ML model.

The preprocessing rule of output parameters required by the AI/ML model is used to indicate how to reprocess the output data set corresponding to the AI/ML model. The operations involved in the reprocessing process may include at least one of data dimensionality reduction, data dimensionality upgrade, redundancy elimination, or redistribution. For specific processing methods, the reference is made to the relevant introduction in the fourth information.

In another implementation manner, at least two pieces of the fifth information, the sixth information, and the seventh information may be defined in combination, which is not limited in the present disclosure.

The eighth information: application scenario information of AI/ML model.

The application scenario information of the AI/ML model refers to different usage scenarios under the same functional feature. For example, for the AI/ML model used for location, application scenarios may be further subdivided into Line of Sight (LoS) scenario, Non-Line of Sight (NLoS) scenario, or mixed scenarios (including both LoS and NLoS). For another example, for the AI/ML model used for mobility control, application scenarios may be further subdivided into terrestrial communication scenario and non-terrestrial communication scenario (including sub-scenarios such as satellite communication, drone communication, and hot air balloon communication). Each scenario may be further divided into sub-scenarios such as highspeed mobility scenario, medium-speed mobility scenario, and low-speed mobility scenario, and may also be divided into sub-scenarios such as high-frequency mobility scenario and low-frequency mobility scenario. A pairwise combination of scenarios may also be considered, such as a terrestrial communication with high-frequency mobility scenario.

Alternatively, the eighth information may have a value, and the meaning of the value indicates that the application scenario of the AI/ML model is a full scenario (that is, the AI/ML model is applicable to any scenario corresponding to functional features associated with the AI/ML model). For example, for an AI/ML model used for location, it is assumed that the eighth information includes two bits, a value of '00' may be used to represent any scenario, a value of '01' may be used to represent a LoS scenario, a value of '10' may be used to represent an NLoS scenario, and a value of '11' may be used to represent a mixed scenario.

The ninth information: deployment location information of the AI/ML model.

The deployment location information of the AI/ML model includes any of the following meanings: deployment on a core network device, deployment on an application server (Over The Top (OTT) server), deployment on an Operation Administration and Maintenance (OAM), deployment on an access network device, deployment on a terminal device, or no deployment location restriction.

The tenth information: a capability requirement for usage of AI/ML model.

The capability requirement for usage of AI/ML model includes at least one of the following: minimum requirement for floating-point number calculation capability required by the usage of AI/ML model, minimum requirement for running memory required by the usage of AI/ML model, memory size level occupied by AI/ML model algorithm data (before compilation), memory size level occupied by AI/ML model algorithm data after compilation, minimum input data rate (or code rate) required by the usage of AI/ML model, minimum output data rate (or code rate) required by AI/ML model, or maximum output data rate (or code rate) required by AI/ML model.

The eleventh information: performance monitoring metric information of AI/ML model.

The performance monitoring metric information of the AI/ML model includes at least one of the following: an average energy consumption of a single time of reasoning process, an average floating-point number calculation amount of a single time of reasoning process, an average delay of a single time of reasoning process, a system throughput, a system bit error rate, or an average transmission delay of a data packet.

The twelfth information: home address information of the AI/ML model.

The home address information of the AI/ML model is used to indicate information related to a provider of the AI/ML model data, and specifically includes information of a country region to which the AI/ML model data belongs and/or information of a service provider to which the AI/ML model data belongs.

The service provider may be any one of OTT vendor information, network operator information (for example, indicated by a PLMN identifier), or public website information.

The thirteenth information: effective usage range information for AI/ML model.

The effective usage range information of the AI/ML model includes at least one of: geographic area information for which effective usage is allowed, country information for which effective usage is allowed, PLMN information for which effective usage is allowed, Tracking Area Code (TAC) information for which effective usage is allowed, RAN Area Code (RANAC) information for which effective usage is allowed, or cell information for which effective usage is allowed.

The fourteenth information: generalization feature information of AI/ML model.

The generalization feature reflects the extensive degree of applicable scenarios of an AI/ML model. Generally speaking, the higher the generalization feature of an AI/ML model, the more application scenarios the model is applicable to. The generalization feature information of the AI/ML model may include application scenario information of at least one AI/ML model (see the definition in the eighth information), which is used to indicate that the associated AI/ML model may be used for the above included application scenarios.

The fifteenth information: version number information of AI/ML model algorithm data.

As different parameters in the same application scenario change with time, the algorithm data of the AI/ML model corresponding to the function may need to be fine-tuned or updated. The application scenario for the updated AI/ML model is the same as the application scenario for the AI/ML model before the update. The function for the updated AI/ML model is also the same as the function for the AI/ML model before the update. The details of the model algorithm data are slightly different, so the models may be distinguished by the version numbers of model algorithm, which facilitates the control and management for similar AI/ML model algorithms.

The sixteenth information: precision level information of the AI/ML model algorithm.

Even for AI/ML models with the same function and the same application scenario, the complexities of model algorithm design are different, and the corresponding inference precisions of AI/ML models will be different. In order to distinguish the differences in inference precisions of similar AI/ML models, the precision level information of the AI/ML model algorithm may be used to describe the inference precision of an AI/ML model.

The seventh information: compilation or storage format information of AI/ML model algorithm data.

AI/ML model algorithm is essentially a program written in computer language. The program file types written by different language platforms are different. Some languages are compatible with others, and some languages are not compatible with others. Then, the compilation format information of AI/ML model algorithm data is also important information to describe an AI/ML model. AI/ML model users may know the compilation environment required to use the AI/ML model through this information. Otherwise, the wrong usage of incompatible language compilation environment will lead to the inability to use the corresponding AI/ML model algorithm.

In the wireless communication method provided by the embodiments of the present disclosure, information related to AI/ML model is transmitted through a user plane resource or a control plane resource. The information related to AI/ML model is transmitted by at least one of the following manners.

The core network device transmits the information related to AI/ML model to the access network device through a control message or a data stream, and the access network device manages the AI/ML model transmitted to the terminal device based on all or part of the information related to AI/ML model transmitted by the core network device. The method using the control message further relates to a data segment operation, and the method using the data stream further relates to a function description such as data splitting;

The access network device transmits the information related to AI/ML model to the terminal device through a control message or a data stream, and the access network device manages the AI/ML model obtained by the terminal device based on all or part of the information related to AI/ML model. The method using the control message further relates to a data segment operation, and the method using the data stream further relates to a function description such as data splitting.

Before transmitting information related to AI/ML model to the terminal device, the qualification of the terminal device may be verified, and the network device may also perform registration verification before storing information related to AI/ML model.

In the wireless communication method provided by the embodiments of the present disclosure, on the one hand, regardless of the data related to AI/ML model being transmitted to the terminal device through the user plane or the control plane, the access network device may obtain part or all of the information related to AI/ML model by some manners, thereby facilitating subsequent management of AI/ML model deployed on the terminal device. For example, the access network device activates, deactivates, and switches the AI/ML model deployed by the terminal device based on the obtained information related to AI/ML model. On the other hand, authorization verification is required before the terminal device obtains information related to AI/ML model or before the network device stores information related to AI/ML model, and the transmission process of the information related to AI/ML model may be triggered only after the verification is passed, which ensures the compliance of data sources and the compliance of users.

In practical applications, the wireless communication method provided by the embodiments of the present disclosure may also be applied to negotiation of other policies other than PCF. Further, the negotiation of the service type may not be limited to the use of the corresponding policy, and may be applicable to the network and the UE mutually determining the service supported/allowed by the other party.

The preferred embodiments of the present disclosure have been described in detail above with reference to the accompanying drawings, but the present disclosure is not limited to the specific details in the above-described embodiments. Within the scope of the technical concept of the present disclosure, various simple modifications may be made to the technical solutions of the present disclosure, and these simple modifications all fall within the scope of protection of the present disclosure. For example, various specific technical features described in the above-described detailed embodiments may be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, various embodiments described in the present disclosure and/or the technical features in various embodiments may be arbitrarily combined with the prior art, and the technical solutions obtained after the combination should also fall within the scope of protection of the present disclosure.

It should also be understood that in various method embodiments of the present disclosure, the size of the sequence number of the above-described processes does not mean the sequence of execution, and the sequence of execution of various processes should be determined by its function and internal logic, and should not constitute any limitation on the implementation of the embodiments of the present disclosure. In addition, in the embodiments of the present disclosure, the terms "downlink", "uplink" and "sidelink" are used to indicate the transmission direction of signals or data. The "downlink" is used to indicate that the transmission direction of signals or data is the first direction (i.e., transmitting from the station to the UE of the cell). The "uplink" is used to indicate that the transmission direction of signals or data is the second direction (transmitting from the UE of the cell to the station). The "sidelink" is used to indicate that the transmission direction of the signal or data is the third direction (transmitting from the UE 1 to the UE 2). For example, "downlink signal" indicates that the transmission direction of the signal is the first direction. In addition, the term "and/or" is merely used for describing an association relationship of associated objects, which indicates that there may be three relationships. Specifically, A and/or B may represent that there are three situations: A exists alone, A and B exist simultaneously, or B exists alone. In addition, the character "/" in the present disclosure generally indicates that there is a "or" relationship between the associated objects.

FIG. 10 is a schematic structural diagram of a terminal device according to an embodiment of the present disclosure. As illustrated in FIG. 10, the terminal device 1000 includes the first communication unit 1001.

The first communication unit 1001 is configured to receive the first information sent by an access network device. The first information includes information associated with the first model. The first information is sent through a control message and/or through a data channel.

It may be understood that the terminal device further includes the first storage unit. The first storage unit is configured to store the received first information.

In some embodiments, the first communication unit 1001 is further configured to receive the first message sent by the access network device. The first message carries the first information, and the first message is a control message sent by the access network device.

In some embodiments, the first message carries the first information by at least one of following manners: all of the first information is included in a first information container included in the first message; part of the first information is included in the first information container included in the first message; or all of the first information is included in the first message and the first information is not included in any information container.

In some embodiments, when all of the first information is included in the first information container included in the first message or when part of the first information is included in the first information container included in the first message, the first message further includes model control information.

In some embodiments, the model control information includes at least one of: a model identifier of the first model; or description information of the first model.

In some embodiments, the first information is carried on at least one first message.

In some embodiments, the first information is carried as a whole on one first message.

In some embodiments, the first information is divided into at least two segments, and different segments are carried on different first messages in at least two first messages.

In some embodiments, the first message further carries at least one piece of following segment indication information: segment serial number information of a segment carried on the first message; or the first indication information used for indicating whether the segment carried on the first message is a last segment of the at least two segments.

In some embodiments, the first message carries the segment indication information by at least one of the following manners: the segment indication information is included in the first information container included in the first message; or the segment indication information is included in the first message and the segment indication information is not included in any information container.

In some embodiments, the first communication unit 1001 is further configured to receive the first data packet sent by the access network device. The first data packet includes the first information, and the first data packet is carried on the first data channel between the access network device and the terminal device.

In some embodiments, a resource used by the first data channel includes at least one of: a DRB resource; or a radio bearer resource used for carrying the first information between the terminal device and the access network device.

In some embodiments, the first information is divided into at least one first data block, and different first data blocks are included in different first data packets in at least one first data packet.

In some embodiments, the first data packet further includes the first data packet header. The first data packet header includes at least one of: a model identifier of the first model; block serial number information that is associated with the first data block included in the first data packet; or QoS indication information that corresponds to the first data block included in the first data packet.

In some embodiments, the first communication unit 1001 is further configured to receive the second message sent by the access network device. The second message is used for transmitting the first configuration information. The first configuration information is used for configuring a resource used by the first data channel, and the second message is a control message sent by the access network device.

In some embodiments, the control message sent by the access network device includes at least one of: a RRC message; a MAC CE message; a DCI message; or the first dedicated control message.

In some embodiments, the first information is stored in the access network device or a core network device.

FIG. 11 is a schematic structural diagram of an access network device according to an embodiment of the present disclosure. As illustrated in FIG. 11, the access network device 1100 includes the second communication unit 1101.

The second communication unit 1101 is configured to send the first information to a terminal device. The first information includes information associated with the first model, and the first information is sent through a control message and/or through a data channel.

It may be understood that the access network device may further include the second storage unit configured to store the first information.

In some embodiments, the second communication unit 1101 is further configured to send the first message to the terminal device. The first message carries the first information, and the first message is a control message sent by the access network device.

In some embodiments, the first message carries the first information by at least one of following manners: all of the first information is included in the first information container included in the first message; part of the first information is included in the first information container included in the first message; or all information of the first information is included in the first message and the first information is not included in any information container.

In some embodiments, when all of the first information is included in the first information container included in the first message or when part of the first information is included in the first information container included in the first message, the first message further includes model control information.

In some embodiments, the first information is carried on at least one first message.

In some embodiments, the first information is carried as a whole on one first message.

In some embodiments, the first information is divided into at least two segments, and different segments are carried on different first messages in at least two first messages.

In some embodiments, the first message further carries at least one piece of the following segment indication information: segment serial number information of a segment carried on the first message; or the first indication information used for indicating whether the segment carried on the first message is a last segment of the at least two segments.

In some embodiments, the first message carries the segment indication information by at least one of the following manners: the segment indication information is included in the first information container included in the first message; or the segment indication information is included in the first message and the segment indication information is not included in any information container.

In some embodiments, the second communication unit 1101 is further configured to transmit the first data packet to the terminal device. The first data packet includes the first information, and the first data packet is carried on the first data channel between the access network device and the terminal device.

In some embodiments, a resource used by the first data channel includes at least one of: a DRB resource; or a radio bearer resource used for carrying the first information between the terminal device and the access network device.

In some embodiments, the first information is divided into at least one first data block, and different first data blocks are included in different first data packets in at least one first data packet.

In some embodiments, the first data packet further includes the first data packet header. The first data packet header includes at least one of: a model identifier of the first model; block serial number information that is associated with the first data block included in the first data packet; or QoS indication information that corresponds to the first data block included in the first data packet.

In some embodiments, the second communication unit 1101 is further configured to send the second message to the terminal device. The second message is used for transmitting the first configuration information. The first configuration information is used for configuring a resource used by the first data channel, and the second message is a control message sent by the access network device.

In some embodiments, the control message sent by the access network device includes at least one of: a RRC message; a MAC CE message; a DCI message; or the first dedicated control message.

In some embodiments, the access network device further includes the first trigger unit. The first trigger unit is configured to actively trigger a sending of the first information or trigger the sending of the first information based on a request of the terminal device.

In some embodiments, the access network device further includes the second trigger unit. The second trigger unit is configured to trigger a registration process for the first information. The registration process is configured to verify a validity of the first information and/or to register information included in the first information.

In some embodiments, the registration process is performed by the access network device or the core network device.

In some embodiments, the access network device further includes the third trigger unit. The third trigger unit is configured to trigger an authentication process for the terminal device. The authentication process is used to verify an identity validity for obtaining the first information by the terminal device and/or to perform charging registration for obtaining the first information by the terminal device.

In some embodiments, the authentication process is performed by the access network device or the core network device.

In some embodiments, the first information is stored in the access network device or a core network device.

In some embodiments, the second communication unit 1101 is further configured to receive the first information sent by the core network device if the first information is stored in the core network device.

In some embodiments, the second communication unit 1101 is further configured to receive the third message sent by the core network device. The third message carries the first information, and the third message is a control message sent by the core network device.

In some embodiments, the third message carries the first information by at least one of the following manners: all of the first information is included in a second information container included in the third message; part of the first information is included in the second information container included in the third message; or all of the first information is included in the third message and the first information is not included in any information container.

In some embodiments, when all of the first information is included in the second information container included in the third message or when part of the first information is included in the second information container included in the third message, the third message further includes model control information.

In some embodiments, the model control information includes at least one of: a model identifier of the first model; or description information of the first model.

In some embodiments, the first information is carried on at least one third message.

In some embodiments, the first information is carried as a whole on one third message.

In some embodiments, the first information is divided into at least two segments, and different segments are carried on different third messages in at least two third messages.

In some embodiments, the third message further carries at least one piece of the following segment indication information: segment serial number information of a segment carried on the third message; or the second indication information used for indicating whether the segment carried on the third message is a last segment of the at least two segments.

In some embodiments, the third message carries the segment indication information by at least one of the following manners: the segment indication information is included in the second information container included in the third message; or the segment indication information is included in the third message and the segment indication information is not included in any information container.

In some embodiments, the second communication unit 1101 is further configured to receive the second data packet sent by the core network device. The second data packet includes the first information, and the second data packet is carried on the second data channel between the access network device and the core network device.

In some embodiments, a resource used by the second data channel includes at least one of: an interface data channel resource; or an interface bearer resource used for carrying the first information between the core network device and the access network device.

In some embodiments, the first information is divided into at least one second data block, and different second data blocks are included in different second data packets in at least one second data packet.

In some embodiments, the second data packet further includes at least one of: the second data packet header that is associated with the second data block included in the second data packet; or channel data header information that is associated with the first information or associated with a session identifier associated with the first information.

In some embodiments, the second data packet header includes at least one of: a model identifier of the first model; block serial number information that is associated with the second data block included in the second data packet; or QoS indication information that corresponds to the second data block included in the second data packet.

In some embodiments, the second communication unit 1101 is further configured to receive the fourth message sent by the core network device. The fourth message is used for requesting a resource used to establish the second data channel, and the fourth message is a control message sent by the core network device.

In some embodiments, the fourth message includes at least one of: a session identifier associated with the first information; a model identifier of the first model; description information of the first model; a flow identifier corresponding to a QoS flow associated with the first information; the first number; the first address; or channel data header information. The first number is a number of suggested RB resources. The first address is an address for uplink data transmission and allocated by the core network device for the second data channel. The channel data header information is associated with the first information or associated with a session identifier associated with the first information.

In some embodiments, the channel data header information includes at least one of: a model identifier of the first model; description information of the first model; channel port information; or channel address information.

In some embodiments, the fourth message is actively triggered by the core network device or the fourth message is triggered based on a request of the terminal device, or the fourth message is triggered based on a request of the access network device.

In some embodiments, a sending of the first information is actively triggered by the core network device, or the sending of the first information is triggered based on a request of the terminal device, or the sending of the first information is triggered based on a request of the access network device

In some embodiments, the second communication unit 1101 is further configured to receive the fifth message sent by the core network device. The fifth message is used to indicate that the first information is successfully received by the terminal device or the fifth message is used to indicate that the first information is transmitted completely, and the fifth message is a control message sent by the core network device.

In some embodiments, the control message sent by the core network device includes at least one of: a NG interface messages; a NAS message; a location control message; or the second dedicated control message.

FIG. 12 is a schematic structural diagram of the core network device according to an embodiment of the present disclosure. As illustrated in FIG. 12, the core network device 1200 includes the third communication unit 1201.

The third communication unit 1201 is configured to send the first information to an access network device. The first information includes information associated with the first model, and the first information is sent through a control message and/or through a data channel.

It may be understood that the core network device 1200 may further include the third storage unit. The third storage unit is configured to store the first information.

In some embodiments, the first information is stored in the core network device.

In some embodiments, the third communication unit 1201 is further configured to send the third message to the access network device. The third message carries the first information, and the third message is a control message sent by the core network device.

In some embodiments, the third message carries the first information by at least one of the following manners: all of the first information is included in the second information container included in the third message; part of the first information is included in the second information container included in the third message; or all of the first information is included in the third message and the first information is not included in any information container.

In some embodiments, when all of the first information is included in the second information container included in the third message or when part of the first information is included in the second information container included in the third message, the third message further includes model control information.

In some embodiments, the model control information includes at least one of: a model identifier of the first model; or description information of the first model.

In some embodiments, the first information is carried on at least one third message.

In some embodiments, the first information is carried as a whole on one third message.

In some embodiments, the first information is divided into at least two segments, and different segments are carried on different third messages in at least two third messages.

In some embodiments, the third message further carries at least one piece of the following segment indication information: segment serial number information of a segment carried on the third message; or second indication information used for indicating whether the segment carried on the third message is a last segment of the at least two segments.

In some embodiments, the third message carries the segment indication information by at least one of the following manners: the segment indication information is included in the second information container included in the third message; or the segment indication information is included in the third message and the segment indication information is not included in any information container.

In some embodiments, the third communication unit 1201 is further configured to send the second data packet to the access network device. The second data packet includes the first information, and the second data packet is carried on the second data channel between the access network device and the core network device.

In some embodiments, a resource used by the second data channel includes at least one of: an interface data channel resource; or an interface bearer resource used for carrying the first information between the core network device and the access network device.

In some embodiments, the first information is divided into at least one second data block, and different second data blocks are included on different second data packets in at least one second data packet.

In some embodiments, the second data packet further includes at least one of: the second data packet header associated with the second data block included in the second data packet; or channel data header information associated with the first information or associated with a session identifier associated with the first information.

In some embodiments, the second data packet header includes at least one of: a model identifier of the first model; block serial number information associated with the second data block included in the second data packet; QoS indication information that corresponds to the second data block included in the second data packet.

In some embodiments, the third communication unit 1201 is further configured to send the fourth message to the access network device. The fourth message is used for requesting a resource used to establish the second data channel, and the fourth message is a control message sent by the core network device.

In some embodiments, the fourth message includes at least one of: a session identifier associated with the first information; a model identifier of the first model; description information of the first model; a flow identifier corresponding to a Qos flow associated with the first information; the first number; the first address; or channel data header information. The first number is a number of suggested RB resources. The first address is an address for uplink data transmission and allocated by the core network device for the second data channel. The channel data header information is associated with the first information or associated with a session identifier associated with the first information.

In some embodiments, the channel data header information includes at least one of: a model identifier of the first model; description information of the first model; channel port information; or channel address information.

In some embodiments, the fourth message is actively triggered by the core network device, or the fourth message is triggered based on a request of the terminal device, or the fourth message is triggered based on a request of the access network device.

In some embodiments, a sending of the first information is actively triggered by the core network device, or the sending of the first information is triggered based on a request of the terminal device, or the sending of the first information is triggered based on a request of the access network device.

In some embodiments, the third communication unit 1201 is further configured to send the fifth message to the access network device. The fifth message is used to indicate that the first information is successfully received by the terminal device or the fifth message is used to indicate that the first information is transmitted completely, and the fifth message is a control message sent by the core network device.

In some embodiments, the control message sent by the core network device includes at least one of the following: a NG interface message; a NAS message; a location control message; or the second dedicated control message.

In some embodiments, the core network device 1200 further includes a registration unit. The registration unit is configured to perform a registration process. The registration process is used to verify a validity of the first information and/or to register information included in the first information.

In some embodiments, the core network device 1200 further includes an authentication unit. The authentication unit is configured to perform an authentication process. The authentication process is used to verify an identity validity for obtaining the first information by the terminal device and/or to perform charging registration for obtaining the first information by the terminal device.

Those skilled in the art should understand that the related descriptions of the terminal device 1000, the access network device 1100, and the core network device 1200 described above according to the embodiments of the present disclosure may be understood with reference to the related descriptions of the wireless communication method according to the embodiments of the present disclosure.

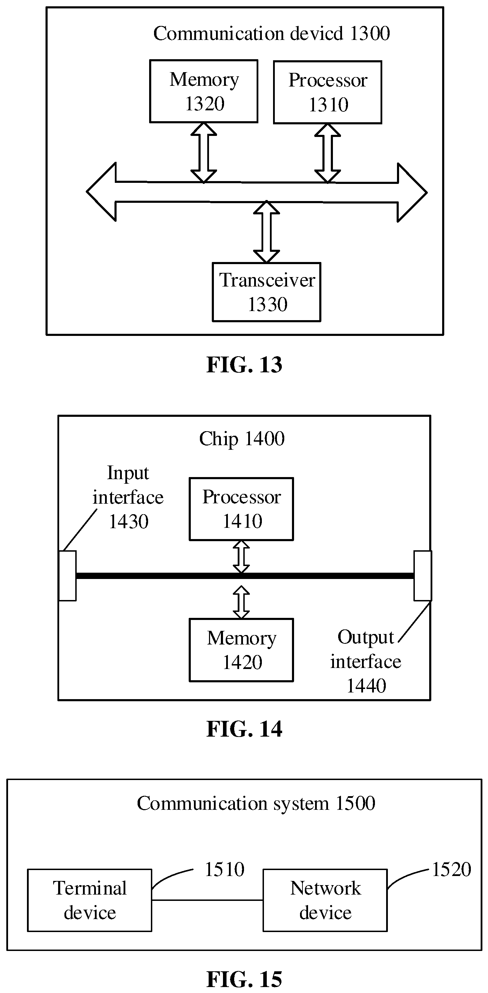

FIG. 13 is a schematic structural diagram of a communication device 1300 according to an embodiment of the present disclosure. The communication device may be a terminal device, an access network device or a core network device. The communication device 1300 illustrated in FIG. 13 includes a processor 1310. The processor 1310 may invoke and execute a computer program from a memory to implement the methods in the embodiments of the present disclosure.

Alternatively, as illustrated in FIG. 13, the communication device 1300 may further include a memory 1320. The processor 1310 may invoke and execute the computer program from the memory 1320 to implement the methods in the embodiments of the present disclosure.

The memory 1320 may be a separate device independent of the processor 1310 or may be integrated in the processor 1310.

Alternatively, as illustrated in FIG. 13, the communication device 1300 may further include a transceiver 1330. The processor 1310 may control the transceiver 1330 to communicate with other devices, specifically, may send information or data to other devices, or may receive information or data sent by other devices.

The transceiver 1330 may include a transmitter and a receiver. The transceiver 1330 may further include one or more antennas.

Alternatively, the communication device 1300 may specifically be the terminal device in the embodiments of the present disclosure, and the communication device 1300 may implement the corresponding processes implemented by the terminal device in various methods of the embodiments of the present disclosure, which will not be described herein for the sake of brevity. The first communication unit in the terminal device may be implemented by the transceiver 1330.

Alternatively, the communication device 1300 may specifically be the access network device in the embodiments of the present disclosure, and the communication device 1300 may implement corresponding processes implemented by the access network device in various methods of the embodiments of the present disclosure, which will not be described herein for the sake of brevity. The second communication unit in the access network device may be implemented by the transceiver 1330. The first trigger unit, the second trigger unit and the third trigger unit in the access network device may be implemented by the processor.

Alternatively, the communication device 1300 may specifically be the core network device in the embodiments of the present disclosure, and the communication device 1300 may implement corresponding processes implemented by the core network device in various methods of the embodiments of the present disclosure, which will not be described herein for the sake of brevity. The third communication unit in the core network device may be implemented by the transceiver 2130. The registration unit and the authentication unit in the core network device may be implemented by the processor 1310.

FIG. 14 is a schematic structural diagram of a chip according to an embodiment of the present disclosure. The chip 1400 illustrated in FIG. 14 includes a processor 1410, and the processor 1410 may invoke and execute a computer program from a memory to implement the methods in the embodiments of the present disclosure.

Alternatively, as illustrated in FIG. 14, the chip 1400 may further include a memory 1420. The processor 1410 may invoke and execute a computer program from the memory 1420 to implement the methods in the embodiments of the present disclosure.

The memory 1420 may be a separate device independent of the processor 1410 or may be integrated in the processor 1410.

Alternatively, the chip 1400 may further include an input interface 1430. The processor 1410 may control the input interface 1430 to communicate with other devices or chips, specifically, may acquire information or data transmitted by other devices or chips.

Alternatively, the chip 1400 may further include an output interface 1440. The processor 1410 may control the output interface 1440 to communicate with other devices or chips, specifically, may output information or data to other devices or chips.

Alternatively, the chip may be applied to the core network device or the access network device in the embodiments of the present disclosure, and the chip may implement the corresponding processes implemented by the core network device or the access network device in various methods of the embodiments of the present disclosure, which will not be described herein for the sake of brevity.

Alternatively, the chip may be applied to the mobile terminal/terminal device in the embodiments of the present disclosure, and the chip may implement the corresponding processes implemented by the mobile terminal/terminal device in various methods of the embodiments of the present disclosure, which will not be described herein for the sake of brevity

It should be understood that the chip mentioned in the embodiment of the present disclosure may be called a system level chip, a system chip, a chip system or a system-on-chip or the like.

FIG. 15 is a schematic block diagram of a communication system 1500 according to an embodiment of the present disclosure. As illustrated in FIG. 15, the communication system 1500 includes the terminal device 1510 and the network device 1520. In an example, the network device 1502 includes an access network device. In an example, the network device 1502 includes an access network device and the core network device.

The terminal device 1510 may be configured to implement the corresponding functions implemented by the terminal device in the above methods, and the network device 1520 may be configured to implement the corresponding functions implemented by the access network device or the core network device in the above methods, which will not be described herein for the sake of brevity.

It should be understood that the processor of the embodiments of the present disclosure may be an integrated circuit chip having signal processing capabilities. In the implementation process, the operations of the above method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The operations of the method disclosed in combination with the embodiments of the present disclosure may be directly embodied as execution by the hardware decoding processor, or may be executed by a combination of hardware and software modules in the decoding processor. The software module may be located in a Random Access Memory (RAM), a flash memory, a Read-Only Memory (ROM), a Programmable ROM (PROM), an electrically erasable PROM (EEPROM), a register and other storage medium mature in the art. The storage medium is located in the memory, and the processor reads the information in the memory and completes the operations of the methods in combination with its hardware.

It is understood that the memory in the embodiments of the present disclosure may be a volatile memory or a non-volatile memory, or may include both volatile and non-volatile memory. The non-volatile memory may be a ROM, a PROM, an Erasable PROM (EPROM), an EEPROM, or a flash memory. The volatile memory may be a RAM, which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) and Direct Rambus RAM (DR RAM). It should be noted that the memory of the systems and methods described herein is intended to include, but is not limited to, these and any other suitable type of memory.

It should be understood that the above memory is exemplary, but not limiting, and, for example, the memory in embodiments of the present disclosure may also be an SRAM, a DRAM, an SDRAM, a DDR SDRAM, an ESDRAM, an SLDRAM, a DR RAM, etc. That is, the memory in embodiments of the present disclosure is intended to include but not limited to these and any other suitable types of memory.

Embodiments of the present disclosure further provide a computer readable storage medium for storing a computer program.

Alternatively, the computer readable storage medium may be applied to the mobile terminal/terminal device in the embodiments of the present disclosure, and the computer program causes the computer to perform the corresponding processes implemented by the mobile terminal/terminal device in various methods of the embodiments of the present disclosure, which will not be described herein for the sake of brevity

Alternatively, the computer readable storage medium may be applied to the access network device in the embodiments of the present disclosure, and the computer program causes the computer to perform the corresponding processes implemented by the access network device in various methods of the embodiments of the present disclosure, which will not be described herein for the sake of brevity.

Alternatively, the computer readable storage medium may be applied to the core network device in the embodiments of the present disclosure, and the computer program causes the computer to perform the corresponding processes implemented by the core network device in various methods of the embodiments of the present disclosure, which will not be described herein for the sake of brevity.

Embodiments of the present disclosure further provide a computer program product including computer program instructions.

Alternatively, the computer program product may be applied to the mobile terminal/terminal device in the embodiments of the present disclosure, and the computer program instruction causes the computer to execute the corresponding processes implemented by the mobile terminal/terminal device in various methods of the embodiments of the present disclosure, which will not be described herein for the sake of brevity

Alternatively, the computer program product may be applied to the access network device in the embodiments of the present disclosure, and the computer program instructions cause the computer to execute the corresponding processes implemented by the access network device in various methods of the embodiments of the present disclosure, which will not be described herein for the sake of brevity.

Alternatively, the computer program product may be applied to the core network device in the embodiments of the present disclosure, and the computer program instructions cause the computer to execute the corresponding processes implemented by the core network device in various methods of the embodiments of the present disclosure, which will not be described herein for the sake of brevity.

Embodiments of the present disclosure further provide a computer program.

Alternatively, the computer program may be applied to the access network device in the embodiments of the present disclosure, and when the computer program is executed on the computer, the computer executes the corresponding processes implemented by the access network device in various methods of the embodiments of the present disclosure, which will not be described herein for the sake of brevity.

Alternatively, the computer program may be applied to the core network device in the embodiments of the present disclosure, and when the computer program is executed on the computer, the computer executes the corresponding processes implemented by the core network device in various methods of the embodiments of the present disclosure, which will not be described herein for the sake of brevity

Alternatively, the computer program may be applied to the mobile terminal/terminal device in the embodiments of the present disclosure, and when the computer program is executed on the computer, the computer executes the corresponding processes implemented by the mobile terminal/terminal device in various methods of the embodiments of the present disclosure, which will not be described herein for the sake of brevity.

Those of ordinary skill in the art will appreciate that the various exemplary units and algorithm steps described in combination with the embodiments disclosed herein may be implemented in electronic hardware or a combination of computer software and electronic hardware. Whether these functions are performed in hardware or software depends on the specific application and design constraints of the technical solutions. Professionals may use different methods for each particular application to implement the described functionality, but such implementation should not be considered outside the scope of the present disclosure.

Those skilled in the art will clearly appreciate that, for convenience and conciseness of description, the specific operating processes of the above described systems, apparatuses and units may refer to the corresponding processes in the aforementioned method embodiments, which will not be described herein for the sake of brevity.

In several embodiments provided herein, it should be understood that the disclosed systems, apparatuses and methods may be implemented in other ways. For example, the above embodiments of the apparatuses are only schematic, for example, the division of the units is only a logical function division, and in practice, there may be another division mode, for example, multiple units or components may be combined or integrated into another system, or some features may be ignored or not performed. On the other hand, the coupling, direct coupling or communication connection between each other shown or discussed may be indirect coupling or communication connection through some interfaces, apparatuses or units, and may be electrical, mechanical or other form.

The units illustrated as separate components may or may not be physically separated, and the components displayed as units may or may not be physical units, i.e., may be located in one place, or may be distributed over multiple network units. Part or all of the units may be selected according to the actual needs to achieve the purpose of the embodiments.

In addition, various functional units in various embodiments of the present disclosure may be integrated in one processing unit, each unit may exist physically alone, or two or more units may be integrated in one unit.

When implemented in the form of software functional units, and sold or used as stand-alone products, the functions may be stored in a computer readable storage medium. With this understanding, the technical solution of the present disclosure in essence or in part contributing to the prior art may be embodied in the form of a software product. The computer software product is stored in a storage medium, and includes instructions for causing a computer device (which may be a personal computer, a server, a network device, etc.) to perform all or part of the steps of the methods described in various embodiments of the present disclosure. The above storage medium includes a U disk, a removable hard disk, a ROM, a RAM, a magnetic disk or an optical disk and other medium capable of storing program codes.

The above is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

## Claims

1. A wireless communication method, comprising:
receiving, by a terminal device, first information sent by an access network device, wherein the first information comprises information associated with a first model, and the first information is sent through a control message and/or through a data channel.

2. The method of claim 1, wherein receiving, by the terminal device, the first information sent by the access network device comprises:
receiving, by the terminal device, a first message sent by the access network device, wherein the first message carries the first information, and the first message is a control message sent by the access network device.

3. The method of claim 2, wherein the first message carries the first information by at least one of following manners:
all of the first information is comprised in a first information container comprised in the first message;
part of the first information is comprised in the first information container comprised in the first message; or
all of the first information is comprised in the first message and the first information is not comprised in any information container.

4. The method of claim 3, wherein when all of the first information is comprised in the first information container comprised in the first message or when part of the first information is comprised in the first information container comprised in the first message, the first message further comprises model control information.

5. The method of claim 4, wherein the model control information comprises at least one of:
a model identifier of the first model; or
description information of the first model.

6. The method of any one of claims 2 to 5, wherein the first information is carried on at least one first message.

7. The method of claim 6, wherein the first information is carried as a whole on one first message.

8. The method of claim 6, wherein the first information is divided into at least two segments, and different segments are carried on different first messages in at least two first messages.

9. The method of claim 7 or 8, wherein the first message further carries at least one piece of following segment indication information:
segment serial number information of a segment carried on the first message; or
first indication information used for indicating whether the segment carried on the first message is a last segment of the at least two segments.

10. The method of claim 9, wherein the first message carries the segment indication information by at least one of following manners:
the segment indication information is comprised in a first information container comprised in the first message; or
the segment indication information is comprised in the first message and the segment indication information is not comprised in any information container.

11. The method of claim 1, wherein receiving, by the terminal device, the first information sent by the access network device comprises:
receiving, by the terminal device, a first data packet sent by the access network device, wherein the first data packet comprises the first information, and the first data packet is carried on a first data channel between the access network device and the terminal device.

12. The method of claim 11, wherein a resource used by the first data channel comprises at least one of:
a Data Radio Bearer (DRB) resource; or
a radio bearer resource used for carrying the first information between the terminal device and the access network device.

13. The method of claim 11 or 12, wherein the first information is divided into at least one first data block, and different first data blocks are comprised in different first data packets in at least one first data packet.

14. The method of claim 13, wherein the first data packet further comprises a first data packet header, and the first data packet header comprises at least one of:
a model identifier of the first model;
block serial number information that is associated with a first data block comprised in the first data packet; or
Quality of service (QoS) indication information that corresponds to the first data block comprised in the first data packet.

15. The method of any one of claims 11 to 14, further comprising:
receiving, by the terminal device, a second message sent by the access network device, wherein the second message is used for transmitting first configuration information, the first configuration information is used for configuring a resource used by the first data channel, and the second message is a control message sent by the access network device.

16. The method of any one of claims 2 to 10 and 15, wherein the control message sent by the access network device comprises at least one of:
a Radio Resource Control (RRC) message;
a Medium Access Control Control Element (MAC CE) message;
a Downlink Control Indication (DCI) message; or
a first dedicated control message.

17. The method of any one of claims 1 to 16, wherein the first information is stored in the access network device or a core network device.

18. A wireless communication method, comprising:
sending, by an access network device, first information to a terminal device, wherein the first information comprises information associated with a first model, and the first information is sent through a control message and/or through a data channel.

19. The method of claim 18, wherein sending, by the access network device, the first information to the terminal device comprises:
sending, by the access network device, a first message to the terminal device, wherein the first message carries the first information, and the first message is a control message sent by the access network device.

20. The method of claim 19, wherein the first message carries the first information by at least one of following manners:
all of the first information is comprised in a first information container comprised in the first message;
part of the first information is comprised in the first information container comprised in the first message; or
all information of the first information is comprised in the first message and the first information is not comprised in any information container.

21. The method of claim 20, wherein when all of the first information is comprised in the first information container comprised in the first message or when part of the first information is comprised in the first information container comprised in the first message, the first message further comprises model control information.

22. The method of any one of claims 19 to 21, wherein the first information is carried on at least one first message.

23. The method of claim 22, wherein the first information is carried as a whole on one first message.

24. The method of claim 22, wherein the first information is divided into at least two segments, and different segments are carried on different first messages in at least two first messages.

25. The method of claim 23 or 24, wherein the first message further carries at least one piece of following segment indication information:
segment serial number information of a segment carried on the first message; or
first indication information used for indicating whether the segment carried on the first message is a last segment of the at least two segments.

26. The method of claim 25, wherein the first message carries the segment indication information by at least one of following manners:
the segment indication information is comprised in a first information container comprised in the first message; or
the segment indication information is comprised in the first message and the segment indication information is not comprised in any information container.

27. The method of claim 18, wherein sending, by the access network device, the first information to the terminal device comprises:
sending, by the access network device, a first data packet to the terminal device, wherein the first data packet comprises the first information, and the first data packet is carried on a first data channel between the access network device and the terminal device.

28. The method of claim 27, wherein a resource used by the first data channel comprises at least one of:
a Data Radio Bearer (DRB) resource; or
a radio bearer resource used for carrying the first information between the terminal device and the access network device.

29. The method of claim 27 or 28, wherein the first information is divided into at least one first data block, and different first data blocks are comprised in different first data packets in at least one first data packet.

30. The method of claim 29, wherein the first data packet further comprises a first data packet header, and the first data packet header comprises at least one of:
a model identifier of the first model;
block serial number information that is associated with a first data block comprised in the first data packet; or
Quality of service (QoS) indication information that corresponds to the first data block comprised in the first data packet.

31. The method of any one of claims 27 to 30, further comprising:
sending, by the access network device, a second message to the terminal device, wherein the second message is used for transmitting first configuration information, the first configuration information is used for configuring a resource used by the first data channel, and the second message is a control message sent by the access network device.

32. The method of any one of claims 19 to 26 and 31, wherein the control message sent by the access network device comprises at least one of:
a Radio Resource Control (RRC) message;
a Medium Access Control Control Element (MAC CE) message;
a Downlink Control Indication (DCI) message; or
a first dedicated control message.

33. The method of any one of claims 18 to 32, further comprising:
actively triggering, by the access network device, a sending of the first information; or triggering, by the access network device, the sending of the first information based on a request of the terminal device.

34. The method of any one of claims 18 to 33, further comprising:
triggering, by the access network device, a registration process for the first information, wherein the registration process is used to verify a validity of the first information and/or to register information comprised in the first information.

35. The method of claim 34, wherein the registration process is performed by the access network device or a core network device.

36. The method of any one of claims 18 to 35, further comprising:
triggering, by the access network device, an authentication process for the terminal device, wherein the authentication process is used to verify an identity validity for obtaining the first information by the terminal device and/or to perform charging registration for obtaining the first information by the terminal device.

37. The method of claim 36, wherein the authentication process is performed by the access network device or a core network device.

38. The method of any one of claims 18 to 37, wherein the first information is stored in the access network device or a core network device.

39. The method of claim 38, wherein when the first information is stored in the core network device, the method further comprises:
receiving, by the access network device, the first information sent by the core network device.

40. The method of claim 39, wherein receiving, by the access network device, the first information sent by the core network device comprises:
receiving, by the access network device, a third message sent by the core network device, wherein the third message carries the first information, and the third message is a control message sent by the core network device.

41. The method of claim 40, wherein the third message carries the first information by at least one of following manners:
all of the first information is comprised in a second information container comprised in the third message;
part of the first information is comprised in the second information container comprised in the third message; or
all of the first information is comprised in the third message and the first information is not comprised in any information container.

42. The method of claim 41, wherein when all of the first information is comprised in the second information container comprised in the third message or when part of the first information is comprised in the second information container comprised in the third message, the third message further comprises model control information.

43. The method of claim 21 or 42, wherein the model control information comprises at least one of:
a model identifier of the first model; or
description information of the first model.

44. The method of any one of claims 40 to 42, wherein the first information is carried on at least one third message.

45. The method of claim 44, wherein the first information is carried as a whole on one third message.

46. The method of claim 44, wherein the first information is divided into at least two segments, and different segments are carried on different third messages in at least two third messages.

47. The method of claim 45 or 46, wherein the third message further carries at least one piece of following segment indication information:
segment serial number information of a segment carried on the third message; or
second indication information used for indicating whether the segment carried on the third message is a last segment of the at least two segments.

48. The method of claim 47, wherein the third message carries the segment indication information by at least one of following manners:
the segment indication information is comprised in a second information container comprised in the third message; or
the segment indication information is comprised in the third message and the segment indication information is not comprised in any information container.

49. The method of claim 39, wherein receiving, by the access network device, the first information sent by the core network device comprises:
receiving, by the access network device, a second data packet sent by the core network device, wherein the second data packet comprises the first information, and the second data packet is carried on a second data channel between the access network device and the core network device.

50. The method of claim 49, wherein a resource used by the second data channel comprises at least one of:
an interface data channel resource; or
an interface bearer resource used for carrying the first information between the core network device and the access network device.

51. The method of claim 49 or 50, wherein the first information is divided into at least one second data block, and different second data blocks are comprised in different second data packets in at least one second data packet.

52. The method of claim 51, wherein the second data packet further comprises at least one of:
a second data packet header that is associated with a second data block comprised in the second data packet; or
channel data header information that is associated with the first information or associated with a session identifier associated with the first information.

53. The method of claim 52, wherein the second data packet header comprises at least one of:
a model identifier of the first model;
block serial number information that is associated with a second data block comprised in the second data packet; or
Quality of service (QoS) indication information that corresponds to the second data block comprised in the second data packet.

54. The method of any one of claims 49 to 53, further comprising:
receiving, by the access network device, a fourth message sent by the core network device, wherein the fourth message is used for requesting a resource used to establish the second data channel, and the fourth message is a control message sent by the core network device.

55. The method of claim 54, wherein the fourth message comprises at least one of:
a session identifier associated with the first information;
a model identifier of the first model;
description information of the first model;
a flow identifier corresponding to a QoS flow associated with the first information;
a first number, the first number being a number of suggested Radio Bearer (RB) resources;
a first address, the first address being an address for uplink data transmission and allocated by the core network device for the second data channel; or
channel data header information, the channel data header information being associated with the first information or associated with a session identifier associated with the first information.

56. The method of claim 52 or 55, wherein the channel data header information comprises at least one of:
a model identifier of the first model;
description information of the first model;
channel port information; or
channel address information.

57. The method of claim 54 or 55, wherein the fourth message is actively triggered by the core network device, or the fourth message is triggered based on a request of the terminal device, or the fourth message is triggered based on a request of the access network device.

58. The method of any one of claims 39 to 57, wherein a sending of the first information is actively triggered by the core network device, or the sending of the first information is triggered based on a request of the terminal device, or the sending of the first information is triggered based on a request of the access network device.

59. The method of any one of claims 39 to 58, further comprising:
receiving, by the access network device, a fifth message sent by the core network device, wherein the fifth message is used to indicate that the first information is successfully received by the terminal device or the fifth message is used to indicate that the first information is transmitted completely, and the fifth message is a control message sent by the core network device.

60. The method of any one of claims 40 to 48, 54 and 59, wherein the control message sent by the core network device comprises at least one of:
a next generation (NG) interface message;
a Non Access Stratum (NAS) message;
a location control message; or
a second dedicated control message.

61. A wireless communication method, comprising:
sending, by a core network device, first information to an access network device, wherein the first information comprises information associated with a first model, and the first information is sent through a control message and/or through a data channel.

62. The method of claim 61, wherein the first information is stored in the core network device.

63. The method of claim 61 or 62, wherein sending, by the core network device, the first information to the access network device comprises:
sending, by the core network device, a third message to the access network device, wherein the third message carries the first information, and the third message is a control message sent by the core network device.

64. The method of claim 63, wherein the third message carries the first information by at least one of following manners:
all of the first information is comprised in a second information container comprised in the third message;
part of the first information is comprised in the second information container comprised in the third message; or
all of the first information is comprised in the third message and the first information is not comprised in any information container.

65. The method of claim 64, wherein when all of the first information is comprised in the second information container comprised in the third message or when part of the first information is comprised in the second information container comprised in the third message, the third message further comprises model control information.

66. The method of claim 65, wherein the model control information comprises at least one of:
a model identifier of the first model; or
description information of the first model.

67. The method of any one of claims 63 to 66, wherein the first information is carried on at least one third message.

68. The method of claim 67, wherein the first information is carried as a whole on one third message.

69. The method of claim 67, wherein the first information is divided into at least two segments, and different segments are carried on different third messages in at least two third messages.

70. The method of claim 68 or 69, wherein the third message further carries at least one piece of following segment indication information:
segment serial number information of a segment carried on the third message; or
second indication information used for indicating whether the segment carried on the third message is a last segment of the at least two segments.

71. The method of claim 70, wherein the third message carries the segment indication information by at least one of following manners:
the segment indication information is comprised in a second information container comprised in the third message; or
the segment indication information is comprised in the third message and the segment indication information is not comprised in any information container.

72. The method of claim 61 or 62, wherein sending, by the core network device, the first information to the access network device comprises:
sending, by the core network device, a second data packet to the access network device, wherein the second data packet comprises the first information, and the second data packet is carried on a second data channel between the access network device and the core network device.

73. The method of claim 72, wherein a resource used by the second data channel comprises at least one of:
an interface data channel resource; or
an interface bearer resource used for carrying the first information between the core network device and the access network device.

74. The method of claim 72 or 73, wherein the first information is divided into at least one second data block, and different second data blocks are comprised in different second data packets in at least one second data packet.

75. The method of claim 74, wherein the second data packet further comprises at least one of:
a second data packet header associated with a second data block comprised in the second data packet;
channel data header information associated with the first information or associated with a session identifier associated with the first information.

76. The method of claim 75, wherein the second data packet header comprises at least one of:
a model identifier of the first model;
block serial number information that is associated with a second data block comprised in the second data packet; or
Quality of service (QoS) indication information that corresponds to the second data block comprised in the second data packet.

77. The method of any one of claims 72 to 76, further comprising:
sending, by the core network device, a fourth message to the access network device, wherein the fourth message is used for requesting a resource used to establish the second data channel, and the fourth message is a control message sent by the core network device.

78. The method of claim 77, wherein the fourth message comprises at least one of:
a session identifier associated with the first information;
a model identifier of the first model;
description information of the first model;
a flow identifier corresponding to a QoS flow associated with the first information;
a first number, the first number being a number of suggested Radio Bearer (RB) resources;
a first address, the first address being an address for uplink data transmission and allocated by the core network device for the second data channel; or
channel data header information, the channel data header information being associated with the first information or associated with a session identifier associated with the first information.

79. The method of claim 75 or 78, wherein the channel data header information comprises at least one of:
a model identifier of the first model;
description information of the first model;
channel port information; or
channel address information.

80. The method of claim 77 or 78, wherein the fourth message is actively triggered by the core network device, or the fourth message is triggered based on a request of the terminal device, or the fourth message is triggered based on a request of the access network device.

81. The method of any one of claims 61 to 80, wherein a sending of the first information is actively triggered by the core network device, or the sending of the first information is triggered based on a request of the terminal device, or the sending of the first information is triggered based on a request of the access network device.

82. The method of any one of claims 61 to 81, further comprising:
sending, by a core network device, a fifth message to the access network device, wherein the fifth message is used to indicate that the first information is successfully received by the terminal device or the fifth message is used to indicate that the first information is transmitted completely, and the sixth message is a control message sent by the core network device.

83. The method of any one of claims 61 to 71 and 82, wherein the control message sent by the core network device comprises at least one of:
a next generation (NG) interface message;
a Non Access Stratum (NAS) message;
a location control message; or
a second dedicated control message.

84. The method of any one of claims 61-83, further comprising:
performing, by the core network device, a registration process, wherein the registration process is used to verify a validity of the first information and/or to register information comprised in the first information.

85. The method of any one of claims 61 to 84, further comprising:
performing, by the core network device, an authentication process, wherein the authentication process is used to verify an identity validity for obtaining the first information by the terminal device and/or to perform charging registration for obtaining the first information by the terminal device.

86. A terminal device, comprising:
a first communication unit, configured to receive first information sent by an access network device, wherein the first information comprises information associated with a first model, and the first information is sent through a control message and/or through a data channel.

87. An access network device, comprising:
a second communication unit, configured to send first information to a terminal device, wherein the first information comprises information associated with a first model, and the first information is sent through a control message and/or through a data channel.

88. A core network device, comprising:
a third communication unit, configured to send first information to an access network device, wherein the first information comprises information associated with a first model, and the first information is sent through a control message and/or through a data channel.

89. A terminal device, comprising a processor and a memory, wherein the memory is configured to store a computer program, and the processor is configured to call and execute the computer program stored in the memory to perform the method of any one of claims 1 to 17.

90. An access network device, comprising a processor and a memory, wherein the memory is configured to store a computer program, and the processor is configured to call and execute the computer program stored in the memory to perform the method of any one of claims 18 to 60.

91. A core network device, comprising a processor and a memory, wherein the memory is configured to store a computer program, and the processor is configured to call and execute the computer program stored in the memory to perform the method of any one of claims 61 to 85.

92. A chip, comprising a processor configured to call and execute a computer program in a memory to cause a device on which the chip is mounted to perform the method of any one of claims 1 to 17, or perform the method of any one of claims 18 to 60, or perform the method of any one of claims 61 to 85.

93. A computer readable storage medium, having stored thereon a computer program that, when being executed, causes a computer to perform the method of any one of claims 1 to 17, or perform the method of any one of claims 18 to 60, or perform the method of any one of claims 61 to 85.

94. A computer program product, comprising computer program instructions that, when being executed, cause a computer to perform the method of any one of claims 1 to 17, or perform the method of any one of claims 18 to 60, or perform the method of any one of claims 61 to 85.

95. A computer program, when being executed, causing a computer to perform the method of any one of claims 1 to 17, or perform the method of any one of claims 18 to 60, or perform the method of any one of claims 61 to 85.
